# EUROPEAN PATENT SPECIFICATION

(11) **EP 2 237 066 B1**
(45) Date of publication and mention of the grant of the patent: **27.11.2013**
(21) Application number: 10157227.9
(22) Date of filing: 22.03.2010
(51) Int. Cl.: G01S 13/82, G01S 13/75

(54) **RFID system and radio apparatus**
RFID-System und Funkvorrichtung
Système RFID et appareil radio

(30) Priority: 31.03.2009 JP 2009085290
(43) Date of publication of application: 06.10.2010
(73) Proprietor: FUJITSU LIMITED, Kawasaki-shi, Kanagawa 211-8588 (JP)
(72) Inventor: Shiotsu, Shinichi, Kawasaki-shi Kanagawa 211-8588 (JP); Yamada, Isamu, Kawasaki-shi Kanagawa 211-8588 (JP); Itasaki, Akira, Kawasaki-shi Kanagawa 211-8588 (JP)
(74) Representative: Fenlon, Christine Lesley

(56) References cited:
- EP-A2- 1 795 915
- WO-A2-2005/110027
- US-A1- 2003 034 887
- US-A1- 2007 241 904

## Description

### CROSS-REFERENCE TO RELATED APPLICATIONS

This application is related to and claims priority to Japanese Patent Application No. 2009-85290 filed on March 31, 2009 .

### BACKGROUND

### 1. FIELD

Various embodiments described herein relate to radio apparatuses capable of transmitting and receiving an RF signal.

### 2. DESCRIPTION OF THE RELATED ART

A conventional apparatus for determining a position of a mobile radio apparatus determines a position of the mobile radio apparatus from a position of one of the reference radio stations, a position of the other of the reference radio stations, a relative angular direction between the mobile radio apparatus and the one of the reference radio stations, and a relative angular direction between the mobile radio apparatus and the other of the reference radio stations.

A conventional wireless-local-area network (WLAN) radio-frequency-identification (RFID) tag system uses a WLAN channel for detecting a position in the wireless-local-area network (WLAN).

In order to avoid interference with a WLAN, the following measures are taken. For example, confirmation that there is no network communication in progress is made using a sniffer circuit, coding sequence or preamble is changed such that transmission from RFID tags are disregarded by a WLAN standard receiving apparatus, or a message is transmitted to an address irrelevant to a unit in the WLAN using a standard signal of the WLAN.

A transmission signal from an RFID tag is received using a plurality of location detection units (LU) and one master unit (MU) in a WLAN, and the position of the tag is obtained by triangulation on the basis of the difference in a plurality of the signals from the tag received by the plurality of the location detection units.

The master unit receives signal information from the plurality of the location detection units, and calculates the position of the tag.

The methods, such as time difference of arrival (TDOA), received signal strength indicator (RSSI), or the other triangulation methods can be used.

A conventional radio IC tag includes a rectification circuit, a function of expanding communication range with a reader, and a function of protecting collisions of a replying radio wave. The rectification circuit changes a search radio wave received from a reader into a direct-current voltage. The direct-current voltage is up-converted by an up-converting circuit into an up-converted voltage. The direct current of the voltage is supplied to a modulation circuit in order to increase the intensity of a replying radio wave so as to expand a communicable range with the reader. The function of protecting collision is performed by controlling the timing of transmission and receiving of radio waves between the reader and the radio IC tag using transmission control information.

In a conventional communication system, a master station performs communication with a plurality of slave stations (non-contact tags) by transmitting and receiving data through radio wave, and records information of the slave stations. Each time a slave station receives a pilot command from a master station, the slave station selects a given time slot set in the master station on the basis of digit information of an identification code regarding the slave station itself, and transmits a response signal at the timing corresponding to this selection.

That is to say, the identification code is information specific to the slave station. If the transmission timing is controlled in accordance with the identification code, the probability of signal collisions can be reduced by a limited number of retransmissions.

The above-described related art configurations are described in prior documents, such as Japanese Unexamined Patent Application Publication No. 2003-315433, International Publication WO2004/036243, Japanese Unexamined Patent Application Publication No. 2006-180073, Japanese Unexamined Patent Application Publication No. 07-177056, etc.

European patent publication EP1795915 discloses a position locator for locating position of a radio tag in which an antenna having directionality receives a harmonic signal generated from a radio tag. Position information relating to a particular direction, and reception information indicating whether or not a harmonic signal was received from that direction are output for each of a range of directions.

US 2007/0241904 A1 discloses a distance measuring system where the reader request is responded by the tag by a modulated carrier wave.

### SUMMARY

An RFID system has a reference radio apparatus capable of radio communication with a mobile radio apparatus. The reference radio apparatus includes a first memory, a first timing generation section, a first transmission section, a first receiving section, a first control section.

The first timing generation section is a component that measures time. The first transmission section is a component that transmits an information-request signal requesting transmission of identification information of the mobile radio apparatus in a first period and that transmits an unmodulated-carrier-wave request signal requesting transmission of an unmodulated carrier wave to be used for positioning the mobile radio apparatus in a second period. The first receiving section is a component that receives a response signal carrying the identification information, that receives the unmodulated carrier wave in a third period determined by time-period data stored in the first memory in accordance with timing from the first timing generation section, and that detects a phase difference of the unmodulated carrier wave. The first control section is a component that outputs the received identification information, that generates data indicating the detected phase difference of the unmodulated carrier wave, and that outputs the data.

The mobile radio apparatus includes a second memory, a second timing generation section, a second receiving section, a second transmission section. The second memory is a component that stores the identification information of the mobile radio apparatus. The second timing generation section is a component that measures time. The second receiving section is a component that receives the information-request signal and that receives the unmodulated carrier wave. The second transmission section is a component that transmits a response signal carrying the identification information in the second memory in response to receiving of the information-request signal, and that transmits the unmodulated carrier wave in the third period determined by time period data stored in the second memory in accordance with timing from the second timing generation section in response to receiving of the unmodulated-carrier-wave request signal.

### BRIEF DESCRIPTION OF THE DRAWING

Preferred features of the present invention will now be described, purely by way of example, with reference to the accompanying drawings, in which:

Fig. 1 illustrates a schematic configuration of a system, in which a determination is made of a position of an RFID tag as a mobile radio station or a mobile radio apparatus including an RFID tag;

Fig. 2 illustrates a configuration of an active RFID tag as an active non-contact information storage apparatus to be used as a mobile radio station;

Fig. 3 illustrates a configuration of a reader/writer apparatus to be used as a reference radio station;

Fig. 4A illustrates a time chart of transmission processing of an RF signal carrying a tag-information request command or a carrier-wave request command in a reader/writer apparatus;

Fig. 4B illustrates a time chart of a reception waiting state, receiving processing of a receive RF signal, and receiving processing of an unmodulated RF carrier wave in a reader/writer apparatus;

Fig. 4C illustrates a time chart of carrier sense, receiving processing of a receive RF signal, transmission processing of an RF signal carrying a response, and transmission processing of an unmodulated RF carrier wave in an active RFID tag;

Figs. 5A to 5D illustrate examples of frame structures including different commands transmitted by the reader/writer apparatus;

Fig. 6 illustrates a flowchart of processing executed by the reader/writer apparatus;

Figs. 7A and 7B illustrate a flowchart of processing executed by the active RFID tag;

Fig. 8 illustrates a flowchart of processing by a position-determination section or a processor of a host apparatus for determining a position of an RFID tag as a mobile station on the basis of the phase differences of the unmodulated carrier waves detected by individual phase-difference detectors of the reader/writer apparatuses as reference stations;

Fig. 9 serves for explaining a method of determining a position of the mobile station M in accordance with the angular directions of one mobile station M individually obtained in each area with respect to two reference stations A and B;

Figs. 10A and 10B illustrate a communication procedure among a host apparatus, reader/writer apparatuses, and RFID tags in a tag-information access period and a positioning period;

Figs. 11A and 11B illustrate another communication procedure among a host apparatus, reader/writer apparatuses, and RFID tags in a tag-information access period and a positioning period;

Fig. 12A illustrates a time chart of the tag-information requesting of the host apparatus and the received-tag (ID) information processing in the procedure in Fig. 10A;

Figs. 12B to 12l illustrate a time chart of transmission processing of RF signals carrying tag-information request commands (CMD) of the individual reader/writer apparatuses and receiving processing of receive response RF signals in the procedure in Fig. 10A;

Figs. 12J and 12K illustrate a time chart of the carrier sense of active RFID tags, the receiving processing of receive RF signals, and the transmission processing of RF signals carrying responses in the procedure in Fig. 10A;

Fig. 13A illustrates a time chart of positioning requests of a host apparatus, received phase-difference data processing, and RFID-tag-position determination processing in the procedure in Fig. 10B;

Figs. 13B to 13l illustrate a time chart of the transmission processing of RF signals carrying carrier-wave request commands (CMD) of the individual reader/writer apparatuses, the receiving processing of receive response RF signals, the receiving processing of the received unmodulated carrier wave, and the transmission processing of detected phase differences in the procedure in Fig. 10B;

Figs. 13J and 13K illustrate a time chart of the carrier sense of the active RFID tags, the receiving processing of receive RF signals, the transmission processing of RF signals carrying responses, and the transmission processing of the unmodulated carrier wave in the procedure in Fig. 10B;

Fig. 14A illustrates a time chart of the positioning requests of the host apparatus, the received phase-difference data processing, and the RFID-tag-position determination processing in the procedure in Fig. 11B;

Figs. 14B to 14l illustrate a time chart of the transmission processing of RF signals carrying carrier-wave request commands (CMD) of the individual reader/writer apparatuses, the receiving processing of receive RF signals, the receiving processing of the received unmodulated carrier wave, and the transmission processing of detected phase differences in the procedure in Fig. 11B;

Figs. 14J and 14K illustrate a time chart of the carrier sense of active RFID tags, the receiving processing of receive RF signals, the transmission processing of RF signals carrying responses, and the transmission processing of the unmodulated carrier wave in the procedure in Fig. 11 B;

Fig. 15A illustrates a time chart of the positioning requests of the host apparatus, the received phase-difference data processing, and the RFID-tag-position determination processing in the procedure in Fig. 11B;

Figs. 15B to 15l illustrate a time chart of the transmission processing of RF signals carrying carrier-wave request commands (CMD) of the individual reader/writer apparatuses, the receiving processing of receive RF signals, the receiving processing of the received unmodulated carrier wave, and the transmission processing of detected phase differences in the procedure in Fig. 11 B;

Figs. 15J and 15K illustrate a time chart of the carrier sense of active RFID tags, the receiving processing of receive RF signals, the transmission processing of RF signals carrying responses, and the transmission processing of the unmodulated carrier wave in the procedure in Fig. 11 B; and

Fig. 16 illustrates a flowchart of processing for requesting tag information, receiving the tag information, requesting positioning, collecting phase-difference data, and determining positions of RFID tags, which are executed by the host apparatus.

### DETAILED DESCRIPTION OF THE EMBODIMENTS

When identifying a position of a mobile radio station on the basis of phase differences at reference radio stations, if a plurality of mobile radio stations transmit RF signals simultaneously, mutual interference of the RF signals occurs, and thus the positioning of the mobile radio stations becomes difficult.

Also, it is difficult for a reference radio station to determine whether the reference radio station is receiving an RF signal carrying identification information or receiving an unmodulated carrier wave.

Also, if an unmodulated carrier wave is transmitted from a mobile radio station to a reference radio station in a set positioning time period specific to each mobile radio station, such a carrier wave can be transmitted without interference.

In the various embodiments disclosed hereinafter, a radio apparatus is allowed to transmit a carrier wave without interference.

Also, the radio apparatus is allowed to transmit a carrier wave in a such manner that the radio apparatus can be identified.

An RFID system according to an embodiment disclosed below includes a reference radio apparatus capable of radio communication with a mobile radio apparatus.

The reference radio apparatus includes a first memory, a first timing generation section measuring time, a first transmission section, a first receiving section, and a first control section.

The first transmission section is a component that transmits an information-request signal requesting transmission of identification information of the mobile radio apparatus in a first period, and that transmits an unmodulated-carrier-wave request signal requesting transmission of an unmodulated carrier wave to be used for positioning the mobile radio apparatus in a second period.

The first receiving section is a component that receives a response signal carrying the identification information, that receives an unmodulated carrier wave in a third period determined by time-period data stored in the first memory in accordance with timing from the first timing generating section, and that detects a phase difference of the unmodulated carrier wave.

The first control section is a component that outputs the received identification information, that generates data indicating the detected phase difference of the unmodulated carrier wave, and that outputs the data.

The mobile radio apparatus includes a second memory storing the identification information of the mobile radio apparatus, a second timing generation section measuring time, a second receiving section, and a second transmission section.

The second receiving section is a component that receives the information-request signal, and that receives the unmodulated carrier wave.

The second transmission section is a component that transmits a response signal carrying the identification information in the second memory in response to receiving of the information-request signal, and that transmits the unmodulated carrier wave in the third period determined by time period data stored in the second memory in accordance with timing from the second timing generation section in response to receiving of the unmodulated-carrier-wave request signal.

By a system according to an embodiment disclosed below, it becomes possible to transmit a carrier wave without interference, and to transmit a carrier wave in such a manner that a radio apparatus can be identified.

A description will be given of a non-restrictive embodiment with reference to the drawings.

In the drawings, a same reference numeral is attached to a same component.

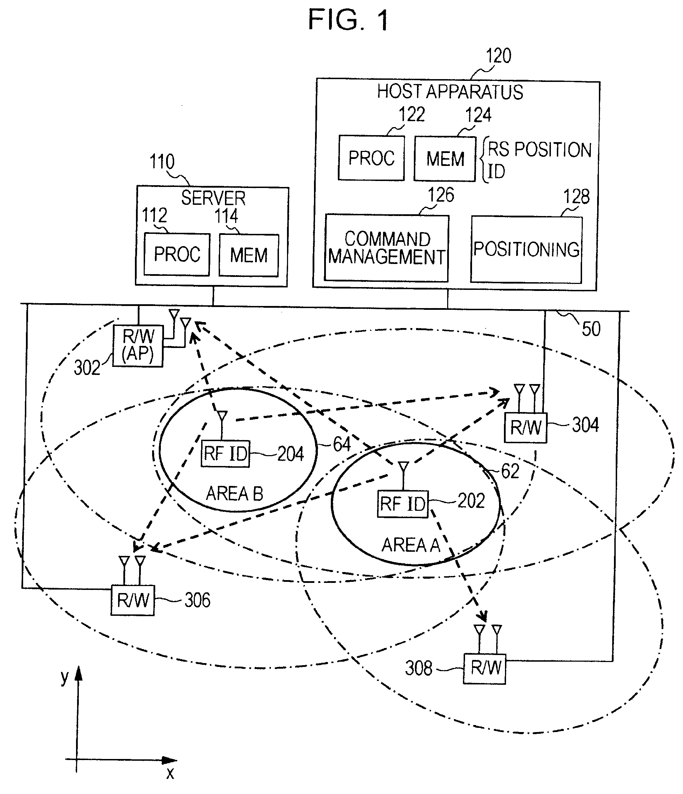

Fig. 1 illustrates a schematic configuration of a system, in which determinations are made of positions of RFID tags 202 and 204 as mobile radio stations or mobile radio apparatuses including RFID tags 202 and 204.

In the system, reader/writer apparatuses 302, 304, 306 and 308 as reference radio stations, a server 110, and a host apparatus 120 are communicably connected through a wired-local-area network (LAN) 50.

In Fig. 1, the RFID tag 202 or 204 may be included in a mobile radio apparatus. Also, a reader/writer apparatus 302, 304, 306 or 308 as a reference radio station may be included in a reference radio apparatus, which is another apparatus.

The positions of the reader/writer apparatuses 302 to 308 become bases of the positions in the system.

In an example of fig. 1, the reader/writer apparatus 302 is connected to the LAN 50.

The reader/writer apparatus 302 is also an access point (AP) for the reader/writer apparatuses 304 to 308.

The reader/writer apparatuses 304 to 308 are also connected to the LAN 50 by wired communication.

As an alternative configuration, reference radio apparatuses including reader/writer apparatuses 304 to 308 may communicate with a radio communication reader/writer apparatus 302 through radio waves.

Mobile radio apparatuses including RFID tags 202 and 204 may be, for example, cellular phones, and are carried by persons to be moved in areas including areas A62 and B64.

The RFID tags 202 and 204 are capable of communicating with the reader/writer apparatuses 302 to 308 by radio communication.

Each of the RFID tags 202 and 204 can communicate with the reader/writer apparatuses 302 to 308 through the server 110.

Each of the mobile radio apparatuses including the RFID tags 202 and 204 may receive guide information suitable for the current position of the mobile radio apparatus from the server 110, and may express the information visually or by sound.

In this case, the area A62 is covered by reference radio apparatuses including the reader/writer apparatus 304 to 308.

Accordingly, the RFID tag 202 in the area A62, for example, can communicate with the reader/writer apparatuses 304 to 308.

The area B64 is covered by the reference radio apparatuses including the reader/writer apparatuses 304 to 306.

Accordingly, the RFID tag 204 in the area A64, for example, can communicate with the reader/writer apparatuses 304 to 306.

The server 110 includes a processor 112 and a storage apparatus 114.

The processor 112 operates in accordance with a server-function application program stored in the storage apparatus 114.

As an alternative configuration, the server function may be implemented in the processor 112 as a hardware configuration.

The host apparatus 120 includes a processor 122, a storage apparatus 124, a command management section 126, and a position determination section 128.

The processor 122 is a component that operates in accordance with application programs, stored in the storage apparatus 124, for a function of command management (126) and a function of position determination (128).

As an alternative configuration, the function of command management (126) and the function of position determination (128) may be implemented in the processor 122 as hardware.

In this embodiment, positions of the reader/writer apparatuses 302 to 308 are known. The position data indicative of locations A (x1, y1), B (x2, y2), C (x3, y3) and D (x4, y4) in which the reader/writer apparatuses 302 to 308 is stored, for example, in a memory 124, etc.

It is desirable that the positions of the reader/writer apparatuses 302 to 308 are fixed. However, the positions of the reader/writer apparatuses 302 to 308 may be changed when there is no influence on the positioning.

Each of the reader/writer apparatuses 302 to 308 has at least two receiving antennas for positioning.

Each of the reader/writer apparatuses 302 to 308 may have another transmission antenna.

As an alternative configuration, one of the receiving antennas may function as a transmission antenna.

Each of the RFID tags 202 and 204 has at least one transmission antenna for positioning.

Each of the RFID tags 202 and 204 may have another receiving antenna.

As an alternative configuration, one of the receiving antennas may function as a transmission antenna.

Each of the RFID tags 202 and 204 is capable of transmitting an RF signal carrying data including the tag ID, and is further capable of transmitting an unmodulated RF carrier wave or signal to the reader/writer apparatuses 302 to 308.

Each of the reader/writer apparatuses 302 to 308 receives the RF signal by at least one receiving antenna, receives the unmodulated RF carrier wave by the two receiving antennas, and determines the phase difference between the unmodulated RF carrier waves from the two antennas.

Each of the reader/writer apparatuses 302 to 308 transmits the tag ID and the phase difference value to the host apparatus 120 through the LAN 50 and/or the reference radio apparatus 302.

The position determination section 128 of the host apparatus 120 is a component that receives the tag IDs of the RFID tags 202 and 204, and the phase difference values of the unmodulated RF carrier waves from the reader/writer apparatuses 302 to 308, and that stores the tag IDs and the phase difference values.

The position determination section 128 of the host apparatus 120 determines angular directions θ of the RFID tags 202 and 204 with respect to a reference direction R at known positions of the reader/writer apparatuses 302 to 308, and then determines the positions (x, y) of the RFID tags 202 and 204 from the angular directions θ.

The reader/writer apparatuses 302 to 308 and the RFID tags 202 and 204 can be regarded as network nodes.

The reception of positioning RF signals from a mobile radio apparatus by a plurality of reference radio stations and the determination of position of the mobile radio apparatus are described in Japanese Laid-open Patent Publication No. 2003-315433 (corresponding to United States Patent No. 7158078).

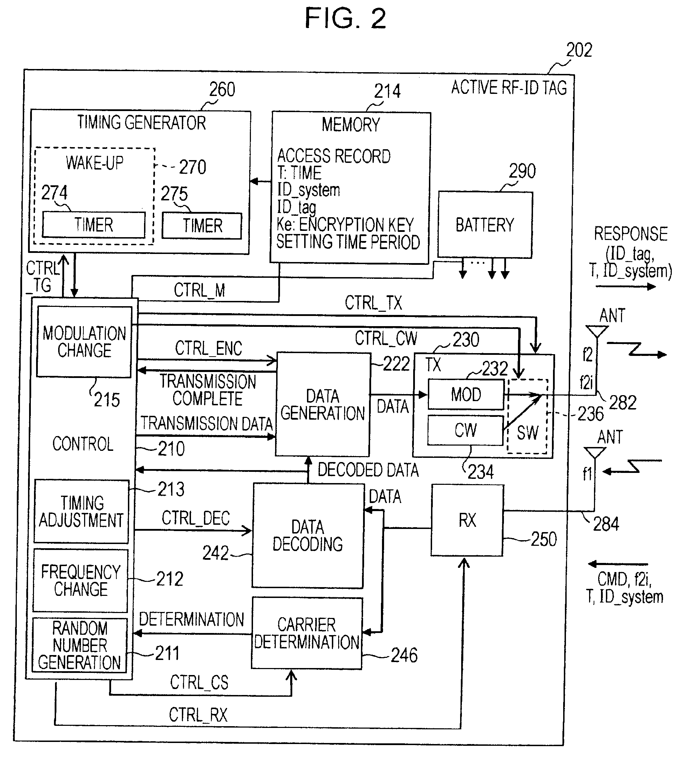

Fig. 2 illustrates a configuration of an apparatus of the active RFID tag 202, as an active non-contact information storage apparatus, to be used as a mobile radio station.

The active RFID tag 204 has a same configuration as that of the active RFID tag 202.

In place of the active RFID tag 202, a non-contact IC card having a same configuration as that of the active RFID tag 202 may be used as an active non-contact information storage apparatus.

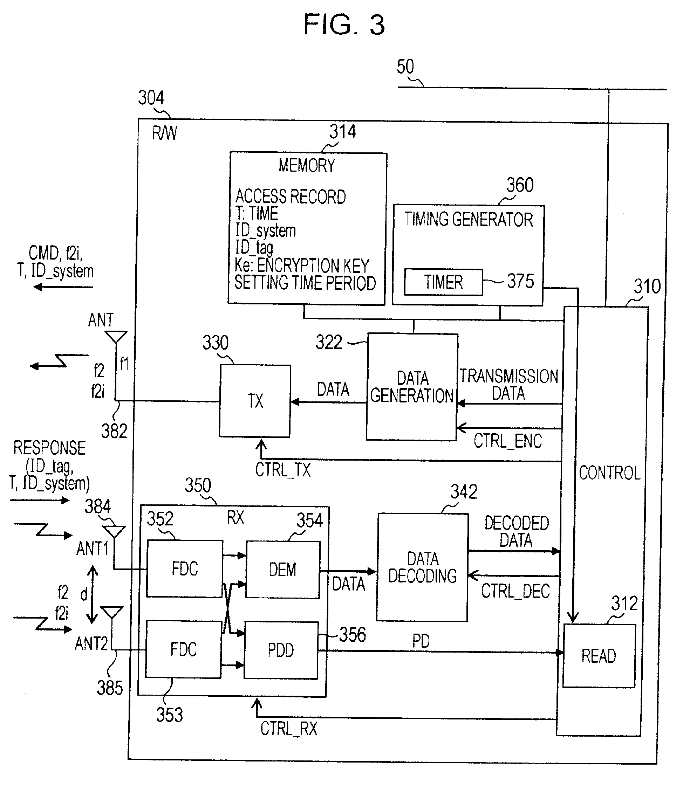

Fig. 3 illustrates a configuration of the reader/writer apparatus 302 to be used as a reference radio station.

The reader/writer apparatuses 304 to 308 have same configurations as that of the reader/writer apparatus 302.

The transmission data between the RFID tag 202 and the reader/writer apparatus 302 is encrypted, and the received data is decrypted to be used for authentication.

As an alternative configuration, authentication may be omitted. Also, transmission data may not be encrypted.

Referring to Fig. 2, the active RFID tag 202 includes a control section 210, a memory 214, a data generation section 222, a transmission section (TX) 230, a receiving section (RX) 250, a data decoding section 242, a carrier determination section 246, a timing generation section 260, a transmission antenna (ANT) 282, a receiving antenna (ANT) 284, and a battery 290.

The timing generation section 260 includes a wake-up section 270 including a timer 274, and a timer 275.

The timers 274 and 275 are components that measure time, and generate date and time.

The wake-up section 270 is a component that is in an active state all the time after the power to the RFID tag 202 is turned on, that generates a wake-up signal on a given carrier-sense cycle Tcs, such as 2 seconds, for example, in accordance with time (date and time, time of day) of the timer 274, and a preset control schedule and time control sequence read from the memory 214, and that supplies the signal to the control section 210.

The timing generation section 260 is a component that generates timing (transmission start time and a transmission time period) for transmitting an unmodulated RF carrier wave (unmodulated RF carrier signal) for measurement in accordance with time of the timer 275 and the length of the time period stored in the memory 214 and the start time, if necessary.

The length of the time period may be received from the reader/writer apparatus 302, and may be stored in the memory 214 by the control section 210. Alternatively, the length of the time period may be received from the reader/writer apparatus 302 together with a carrier-wave request command (CMD), and may be stored in the memory 214.

If the start time is received, the start time is received together with the carrier-wave request command, and is stored in the memory 214.

The control section 210 is a component that corrects time of the timers 274 and 275 on the basis of time (date and time) T in the memory 214, and that writes the current time T generated by the timer 274 in the memory 214 for update.

The data generation section 222 is a component that generates data including the tag ID (ID_tag), etc., stored in the memory 214, that encrypts the data by a given encryption method, that codes the data in accordance with a given coding method, and that supplies transmission frame data to the transmission section 230.

The transmission section (TX) 230 includes a modulator (MOD) 232, an unmodulated carrier wave generator (CW) 234, a switch (SW) 236, and a transmission amplifier (not shown in the figure).

The modulator 232 is a component that modulates a carrier by the baseband coding data received from the data generation section 222, and that transmits an RF signal having a frequency of f2 or a different frequency f2i (i = 1, 2, ... n).

The carrier-wave generator 234 is a component that generates an unmodulated RF carrier wave having a frequency of f2 or f2i, and transmits the wave.

As an alternative configuration, the modulator 232 may generate an unmodulated RF carrier wave having a frequency of f2 or f2i in a carrier-wave time period without using the data from the data generation section 222.

The receiving section (RX) 250 is a component that receives and demodulates the RF signal having a reception frequency f1 to generate baseband coding data, and that generates data indicating the carrier intensity of the received RF signal.

The carrier determination section 246 is a component that receives data indicating the intensity of the power of the RF signal carrier from the receiving section 250, that determines whether there is received carrier on the basis of the data indicating the carrier intensity, and that supplies the determination result to the control section 210.

The data decoding section 242 is a component that decodes the received coded data in accordance with a given coding method, and that decrypts the decoded data in accordance with a given decryption method, and that supplies the decrypted data to the data generation section 222 and the control section 210.

The frequencies f1 and f2 are, for example, 951 MHz and 955 MHz, respectively.

The frequencies f2i are, for example, 955 MHz, 956 MHz, .... , and 960 MHz.

The transmission output of the transmission section (TX) 230 is, for example, 1 mW.

The transmission antenna (ANT) 282 is connected to the transmission section 230.

The receiving antenna (ANT) 284 is connected to the receiving section 250.

As an alternative configuration, the antennas 282 and 284 may be one antenna.

The battery 290 supplies power to individual components 210 to 260, etc.

In this embodiment, the control section 210 is in an active state all the time after the power is turned on.

The control section 210 supplies a memory control signal CTRL_M, a data generation signal CTRL_ENC, a transmission control signal CTRL_TX, and a switch control signal CTRL_SW to the memory 214, the data generation section 222, the transmission section 230, and the switch 236, respectively.

Also, the control section 210 supplies a reception control signal CTRL_RX, a data-decoding control signal CTRL_DEC, a carrier-determination control signal CTRL_CS, and a timing-generation control signal CTRL_TG to the receiving section 250, the data decoding section 242, the carrier determination section 246 and the timing generation section 260, respectively.

The control section 210 may be a microprocessor or a microcomputer which operates in accordance with a program.

The control section 210 includes a random-number generation section 211, a frequency change section 212, a timing adjustment section 213, and a modulation change section 215.

The random-number generation section 211 is a component that generates random numbers for selecting a transmission time slot at random.

The frequency change section 212 is a component that changes the transmission frequency f2i.

The timing adjustment section 213 is a component that adjusts the transmission timing.

The modulation change section 215 is a component that changes a modulated/unmodulated state of the transmission FR signal.

The modulation change section 215 controls the switch 236 of the transmission section 230 in accordance with a setting time period determined by positioning timing from the timer 275 to change input connections to the antenna 282 between output of the modulator (MOD) 232 and output of the unmodulated RF carrier wave generator (CW) 234.

The modulation change section 215 disables the modulator 232 by the transmission control signal CTRL_TX, enables the unmodulated-RF-carrier-wave generator 234 to generate an unmodulated-RF-carrier wave, and to transmit a positioning unmodulated-RF-carrier wave.

As an alternative configuration, the modulation change section 215 may change a modulated/unmodulated state of the transmission FR signal by on/off control of the modulation transmission data to the modulator 232.

The memory 214 stores a tag ID (ID_tag) of an RFID tag 202, an authentication system ID (ID_system), an ID of a reader/writer apparatus, an encryption key/decryption key Ke, current time (date, time) T, an access record by the reader/writer apparatus 302, and a control schedule and a time control sequence of the wake-up section 270.

Further, the memory 214 stores information, such as a present amount of remaining power of the battery 290, a carrier-sense cycle Tcs of the received RF signal, a carrier-sense time period, a receiving-processing time period, a transmission-processing time period, a transmission time period of an unmodulated carrier wave for positioning (duration), etc.

The memory 214 supplies the current time T, a system ID, and an encryption key/decryption key Ke to the data generation section 222 and the data decoding section 242.

These pieces of information may be transmitted from the reader/writer apparatus 302 to the RFID tag 202 in advance, and may be stored in the memory 214 by the control section 210.

These pieces of information in the memory 214 are stored and updated under the control of the control section 210.

The system ID represents a common ID shared by a same group including a plurality of reader/writer apparatuses 302 to 308 and a plurality of RFID tags 202 and 204.

The system ID may be an ID of the reader/writer apparatus 302.

The data generation section 222 includes an encryption section 224 which encrypts transmission data using an encryption key Ke stored in the memory 214 in accordance with a given encryption system.

The data decoding section 242 includes a decryption section 244 which decrypts the receive data using the encryption key/decryption key Ke in accordance with a given encryption system.

Here, a description will be given on the assumption that a given encryption system is a common-key encryption system. However, a public-key encryption system may be used.

Referring to Fig. 3, the reader/writer apparatus 302 includes a control section 310, a memory 314, a data generation section 322, a transmission section (TX) 330, a receiving section (RX) 350, a data decryption section 342, a timing generation section 360, a transmission antenna (ANT) 382, and two receiving antennas (ANT) 384 and 385.

The control section 310 transmits data to and receives data from the server 110 and the host apparatus 120 through the LAN 50.

The control section 310 includes a read section 312 that reads phase-difference data (PD) from the receiving section 350.

The data generation section 322 generates data including the command (CMD), etc., received from the control section 310 in a transmission period, encrypts the data, and codes the encrypted data to generate coded data of a transmission frame.

The transmission section (TX) 330 transmits an RF signal intermittently or periodically, modulates the carrier by the baseband coded data received from the data generation section 322, and transmits an RF signal having a frequency of f1.

The transmission output of the transmission section (TX) 330 is, for example, 100 mW.

The receiving section (RX) 350 includes frequency converters or down converters (FDC) 352 and 353, connected to antennas 384 and 385, respectively, a demodulator (DEM) 354 connected to frequency converters 352 and 353, a phase difference detector (PDD) 356 connected to frequency converters 352 and 353, and an amplifier (not shown in the figure).

The RF signal or the unmodulated carrier wave received through the antennas 384 and 385 are down-converted by the respective frequency converters (FDC) 352 and 353 into intermediate frequencies (IF), and the down-converted received signals are supplied to the demodulator 354 and the phase difference detector 356.

As an alternative configuration, the receive RF signals before having been down-converted by respective frequency converters 352 and 353 may be supplied to the phase difference detectors 356.

In the tag-information access period, the demodulator 354 demodulates the intermediate-frequency signal from the frequency converters 352 and/or 353 into a baseband coded signal.

On the other hand, one of or both of the demodulated signals are supplied to the data decryption section 342.

If both of the signals are supplied to the demodulator 354, the demodulator 354 selects the receive data of one of the signals, or combines both of the signals in order to perform demodulation favorably.

The data decoding section 342 decodes the receive data received from the demodulator 354 of the receiving section 350, decrypts the decoded data to generate baseband decrypted data, and supplies the decrypted data to the control section 310.

The decrypted data may include a tag ID.

In a positioning period, the phase-difference detector 356 detects the phase difference (PD) between the RF signals or the intermediate-frequency signals received by the antenna 384 and 385, and supplies the phase-difference value data to the control section 310.

The read section 312 of the control section 310 reads the phase difference (PD) data, stores the data into the memory 314, and supplies the phase difference data to the host apparatus 120 together with the corresponding tag ID and ID of the reader/writer apparatus 302 through the LAN 50.

The timing generation section 360 measures and generates time in accordance with the preset time control sequence.

The timing generation section 360 generates timing (receiving start time and receiving time period) for receiving an unmodulated RF carrier wave for positioning an unmodulated RF carrier wave in accordance with the start time and the length of the time period stored in the timer 375 and the memory 314.

The transmission antenna (ANT) 382 is connected to the transmission section 330.

The receiving antennas (ANT) 384 and 385 are disposed a distance of d apart, and are connected to the frequency converters 352 and 353, respectively, of the receiving section 350.

As an alternative configuration, the antennas 382 and 384 may be one antenna.

The memory 314 stores information, such as the current time T for authentication, an authentication system ID (ID_system), an encryption key/decryption key Ke, a command-transmission time period, a setting time period for transmitting and receiving a positioning unmodulated carrier wave, etc.

The data generation section 322 includes an encryption section 324 which encrypts transmission data using the encryption key Ke in accordance with a given encryption system stored in the memory 314.

The data decoding section 342 includes a decryption section 344 which decrypts receive data using the encryption key/decryption key Ke in accordance with a given encryption system.

When the control section 310 receives, from the host computer, a command such as a tag ID, a tag-information-read request command or a tag-information-write request command (In the following, simply called a tag-information request command) or a carrier-wave request command, etc., the control section 310 supplies data including such a command to the data generation section 322.

The data may include a transmission frequency f2 or f2i to be used by the RFID tag 202, reference current time T, a new or updated control schedule, a time control sequence, a setting time period for transmitting and receiving a carrier wave, etc.

Such a command may include a command for ordering to correct or update time of the timer 274 together with the current time T.

Such a command may include a command for ordering to correct or update a schedule or a sequence stored in the memory 214 together with a new or updated control schedule or a time control sequence.

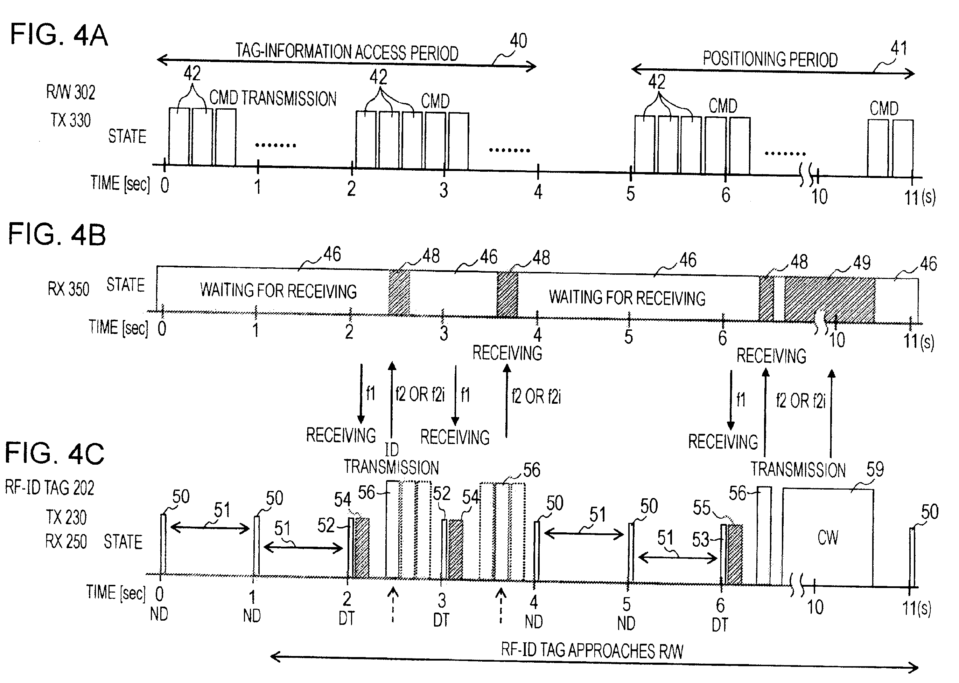

Fig. 4A illustrates a time chart of transmission processing 42 of the RF signal carrying a tag-information request command or a carrier-wave request command (CMD) of the reader/writer apparatus 302.

Fig. 4B illustrates a time chart of a reception waiting state 46 of the reader/writer apparatus 302, receiving processing 48 of the receive RF signal, and receiving processing 49 of an unmodulated RF carrier wave.

Fig. 4C illustrates a time chart of carrier sense 50, 52 and 53 of the active RFID tag 202, receiving processing 54 and 55 of the receive RF signal, transmission processing 56 of the RF signal carrying a response, and transmission processing 59 of an unmodulated RF carrier wave.

Referring to Fig. 4A, in a tag-information access period 40, the data generation section 322 of the reader/writer apparatus 302 generates data including a tag-information request command directed against the RFID tag that received from the control section 310, encrypts the data, and codes the encrypted data to produce the coded encrypted data.

In each slot including successive transmission processing 42, the transmission section 330 transmits an RF signal carrying the command periodically at short intervals.

Referring to Fig. 4C, in the active RFID tag 202, the receiving section 250 and the carrier determination section 246 are enabled (activated) by the control section 210 in time periods of carrier sense 50 and 52 occurring in a carrier sense duration of, for example, about 1 ms to 10 ms on carrier sense cycles Tcs of two seconds, for example, in accordance with the wake-up signal of the wake-up section 270.

Thereby, the receiving section 250 becomes a reception waiting state, and the carrier determination section 246 determines whether there is a received carrier or not in accordance with the data indicating the intensity of receive-RF-signal carrier power from the receiving section 250.

If the RFID tag 202 has not approached the reader/writer apparatus 302, the carrier determination section 246 does not detect a carrier (ND), and determines that there is no carrier.

In a period 51 between two periods of carrier sense 50, the RFID tag 202 goes into a pause mode, and only the control section 210 and the timing-signal generation section 260 are enabled, or the power to the sections is turned on (energized). The other components 214 to 250 are disabled (inactivated), or the power to the other components is turned off (unenergized).

When the RFID tag 202 approaches the reader/writer apparatus 302, and the receiving section 250 of the RFID tag 202 has received an RF signal, the carrier determination section 246 detects (DT) the carrier of the RF signal during the time period of the carrier sense 52, and determines that the carrier is provided.

In response to the determination that the carrier is provided, the receiving section 250 and the data decoding section 242 are enabled during a given duration (for example, 100 ms) in a time period of the receiving processing 54 immediately after.

The receiving section 250 receives and demodulates the RF signal to generate coded encrypted data including a command. The data decoding section 242 decodes the data, decrypts the encrypted data to extract the command and to supply the command to the control section 210.

The control section 210 authenticates the reader/writer apparatus 302 using the time T and the system ID included in the command.

If the authentication is successful, in response to the command, the control section 210 enables the data generation section 222 and the transmission section 230 during a duration (for example, 100 ms) in a time period of the transmission processing 56 randomly selected in a certain time period.

The data generation section 222 encrypts data including necessary information, such as the tag ID (ID_tag) extracted from the memory 214, time T, a system ID, etc., and codes the encrypted data to generate data of a response frame.

The other necessary information may include information on, for example, an identification number on the carrying person of the RFID tag 202, name, age, address, telephone number, Email address, group identification information, and validated period of the RFID tag 202, etc.

The modulator 232 of the transmission section 230 modulates the carrier by the response data including the encrypted tag ID, and transmits the RF signal.

On the other hand, if the authentication has failed, the processing is terminated without generating and transmitting data.

Referring to Fig. 4B, the receiving section 350 of the reader/writer apparatus 302 is always in a reception waiting state 46. If the RFID tag 202 approaches and the RF signal is received, the demodulator 354 of the receiving section 350 demodulates the received RF signal in a time period of the receiving processing 48 to generate the coded encrypted data.

The data decoding section 342 decodes the coded encrypted data, decrypts the decoded encrypted data to reproduce response data including a tag ID, and supplies the reproduced response to the control section 310.

In response to the received and reproduced response, the control section 310 authenticates the RFID tag 202 using the time T and the system ID included in the response, and supplies the tag ID to the host apparatus 120.

The host apparatus 120 processes the tag ID, and monitors and manages the RFID tag.

Referring to Fig. 4A again, in a positioning period 41, the data generation section 322 of the reader/writer apparatus 302 generates data including a carrier-wave request command requesting transmission of an unmodulated RF carrier wave for positioning to the RFID tag 202 having the tag ID received from the control section 310, and encrypts the data, codes the encrypted data to generate the coded encrypted data.

The carrier-wave request command includes the tag ID of the RFID tag 202. Further, the carrier-wave request command may include, for example, information on the carrier-wave time period in the memory 314, such as the carrier-wave transmission start time and the length of the time period.

The transmission section 330 periodically transmits an RF signal carrying the command at short intervals in each successive time slot of the transmission processing 42.

Referring to Fig. 4C again, in the active RFID tag 202, the receiving section 250 and the carrier determination section 246 are enabled by the control section 210 in time periods of the carrier sense 50 and 53 on the carrier sense cycle Tcs.

The receiving section 250 receives the RF signal from the reader/writer apparatus 302, and the carrier determination section 246 detects (DT) the carrier of the RF signal in the time period of the carrier sense 53, and determines that the carrier is provided.

The receiving section 250 and the data decoding section 242 are enabled during a given duration in the time period of the receiving processing 55 immediately after.

The receiving section 250 receives and demodulates the RF signal to generate the coded encrypted data including the command. The data decoding section 242 decodes the data, decrypts the encrypted data to extract the command, and supplies the command to the control section 210.

If the command is determined to be the carrier-wave request command, the control section 210 sets a setting time period for carrier-wave transmission stored in the memory 214, and if necessary, sets the timer 275 in accordance with the transmission start time.

The control section 210 may operate immediately after the setting of the set time period in the timer 275.

If the command includes information on the transmission start time for transmitting the positioning carrier wave, the setting time period, and the transmission frequency f2i, the control section 210 stores the information in the memory 214 in advance.

In response to the command, the control section 210 enables the data generation section 222 and the transmission section 230 in the time period of the transmission processing 56 to be randomly selected.

The data generation section 222 encrypts data including necessary information, such as the tag ID, etc., taken out from the memory 214, and codes the encrypted data to generate response frame data.

The modulator 232 of the transmission section 230 modulates the carrier by the coded response data, and transmits a response RF signal having the frequency f2 or f2i.

In response to the timing from the timing generation section 260 by the timer 275, the modulation change section 215 of the control section 210 enables the unmodulated carrier wave generator 234 of the transmission section 230 in the time period of the carrier-wave transmission processing 56, and then disables the generator after that.

The unmodulated-carrier wave generator 234 generates unmodulated-carrier wave having the specified frequency f2i, and transmits the wave through the antenna 284.

Referring to Fig. 4B again, the receiving section 350 of the reader/writer apparatus 302 receives an unmodulated carrier wave in the setting time period for receiving the carrier wave in the receiving processing 49 in response to the timing from timing generation section 360 by the timer 375.

The start time of the time period may be set.

In this manner, by setting the transmission and receiving time period of an unmodulated carrier wave, it is possible to prevent detecting an irrelevant RF carrier wave mistakenly as detection of transmission of the unmodulated carrier wave requested from the RFID tag 202.

The phase difference detector 356 of the receiving section 350 detects the phase difference between the unmodulated carrier waves or the intermediate frequency signals received by the antennas 384 and 385, and supplies the phase difference value to the control section 310.

The read section 312 of the control section 310 reads the value of the phase difference (PD), stores the value into the memory 314, and supplies the phase difference value to the host apparatus 120 together with the corresponding tag ID and the ID of the reader/writer apparatus 302 through the LAN 50.

The position determination section 128 of the host apparatus 120 stores the IDs of the reader/writer apparatuses 302 to 308 from a plurality of the reader/writer apparatuses 302 to 308, the tag ID of the RFID tag 202, and the phase difference value into the memory 124.

The position determination section 128 processes the positions of the reader/writer apparatuses 302 to 308 and the phase difference thereof, and determines the position of the RFID tag 202.

Most of the time period of the active RFID tag 202 becomes a pause mode.

Accordingly, the power consumption of the active RFID tag 202 is reduced drastically, and thus the operating time of the battery 290 becomes very long.

As an alternative configuration, the receiving section 250 of the RFID tag 202 may always be in a reception waiting state.

Also, the reader/writer apparatus 302 and the RFID tag 202 may transmit and receive an RF signal at the same transmission and reception frequency (f1 = f2).

In this case, the reader/writer apparatus 302 may intermittently transmit the RF signal carrying a command, and may receive an RF signal from the RFID tag 202 in a non-transmission time period.

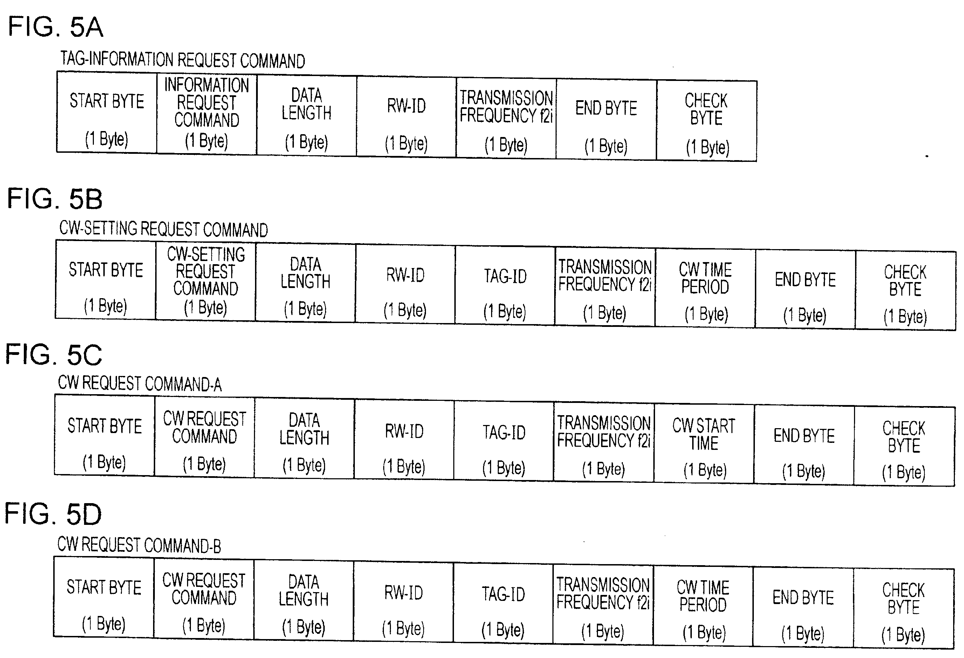

Figs. 5A to 5D illustrate examples of frame structures including different commands transmitted by the reader/writer apparatuses 302 and 304, etc.

In Fig. 5A, the frame of the tag information request command has a start byte, a tag-information request command, a data length, a reader/writer ID, a transmission frequency f2i, an end byte, and a check byte (CRC).

In Fig. 5B, the frame of a carrier-wave (CW) setting request command or a tag-information write command has a start byte, a carrier-wave setting request command, a data length, a reader/writer ID, a destination tag ID, a transmission frequency f2i, a carrier-wave time period (duration, possible start time) set in the RFID tag, an end byte, and a check byte (CRC).

In Fig. 5C, the frame of the carrier-wave (CW) request command has a start byte, a carrier-wave request command, a data length, a reader/writer ID, a destination tag ID, a transmission frequency f2i, start time of the carrier wave, an end byte, and a check byte (CRC).

In Fig. 5D, the frame of the carrier-wave (CW) request command has a start byte, a carrier-wave request command, a data length, a reader/writer ID, a destination tag ID, a transmission frequency f2i, a carrier-wave time period (start time and duration), an end byte, and a check byte (CRC).

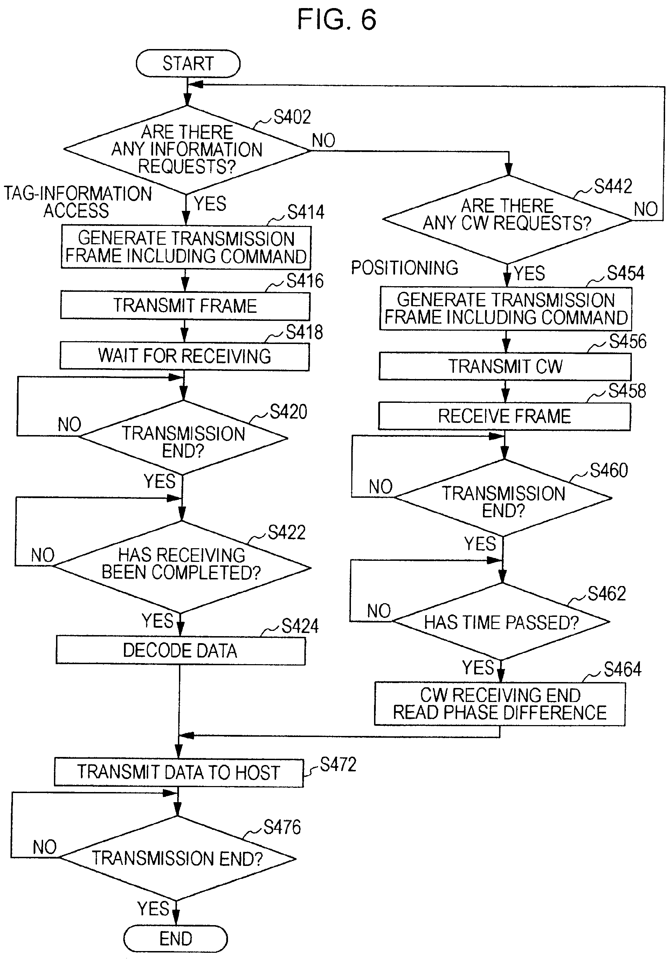

Fig. 6 illustrates a flowchart of processing executed by the reader/writer apparatus 302.

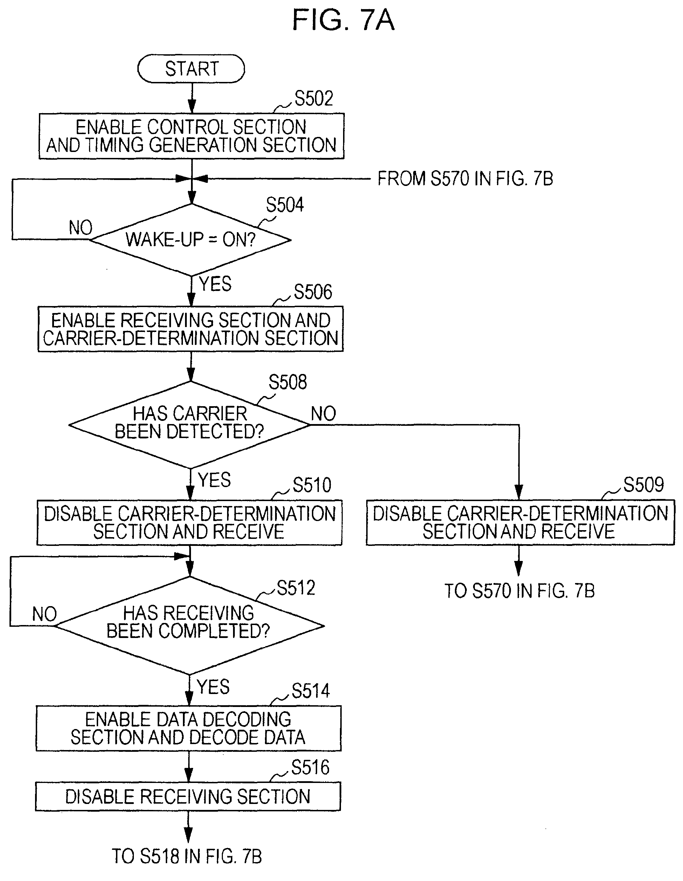

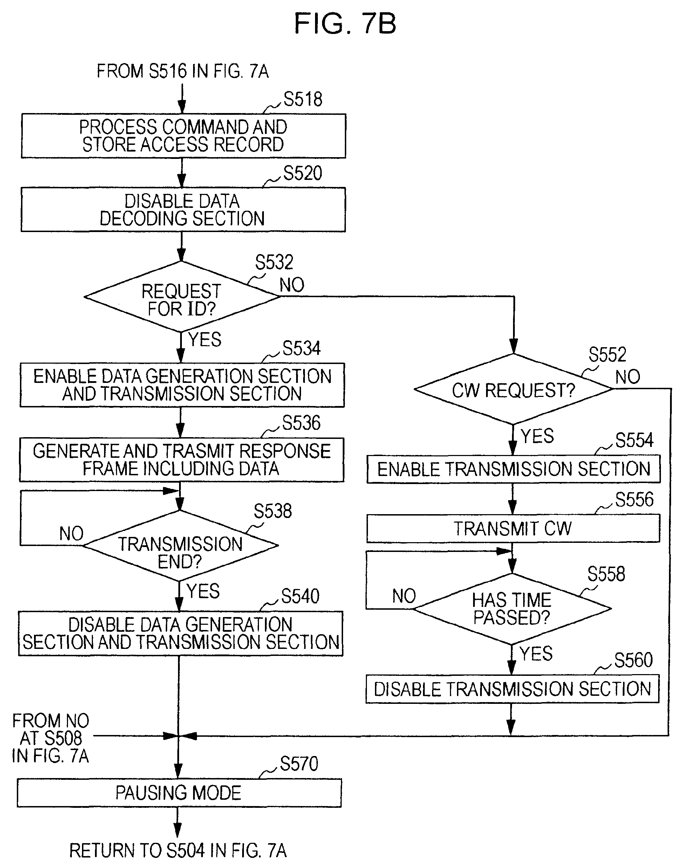

Figs. 7A and 7B illustrate a flowchart of processing executed by the active RFID tag 202.

Referring to Fig. 6, in step 402, the control section 310 of the reader/writer apparatus 302 determines whether there is a tag-information request (tag-ID request, etc.) that has been received from the host apparatus 120.

If determined that there is a tag-information request, the processing proceeds to step 414 for tag-information access processing.

If determined that there is not a tag-information request in step 402, in step 442, the control section 310 determines whether there is a carrier-wave request received from the host apparatus 120.

If determined that there is a carrier-wave request, the processing proceeds to step 454 for positioning processing.

If determined that there is not a carrier-wave request, the processing returns to step 402.

In the tag-information access processing, in step 414, the control section 310 supplies the tag-information request command and the related information to the data generation section 322.

The data generation section 322 encrypts data including the tag-information request command received from the control section 310, the current time T and the system ID taken out from the memory 314, and the ID of the reader/writer apparatus 302 in accordance with a given encryption system, for example, DES (Data Description Standard), triple DES or AES (Advanced Encryption Standard), etc., using the encryption key Ke taken out from the memory 314. The data generation section 322 codes the encrypted data in accordance with, for example, a given coding method, such as the NRZ (Non Return to Zero) coding method or the Manchester coding method, etc., to generate a transmission frame, and supplies the frame to the transmission section 330.

The control section 310 may include, in the tag-information request command, data specifying a response transmission frequency f2 to the command or a variable transmission frequency f2i, data indicating time at which the variable transmission frequency f2i should be used or data indicating a time slot, data indicating the current time T, the control schedule, the time control sequence, and information on the setting carrier-wave time period.

In step 416, the transmission section 330 modulates the carrier by the coded data in the time period of transmission processing 42, and transmits the RF signal having a frequency f1 in the tag-information access period 40 in Fig. 4A.

In step 418, the demodulator 354 of the receiving section 350 waits for the reception of the RF signal having a frequency f2 (reception waiting 46), and receives the RF signal (receiving processing 48).

The reader/writer apparatus 302 may specify the frequency f2i for each RFID tag (tag ID).

Thereby, even if there are a plurality of RFID tags at the same time, the probability of collisions of response transmission from the RFID tags is decreased, and thus it is possible to increase the number of RFID tags that can be identified by the reader/writer apparatus 302 at the same time.

In step 420, the control section 310 determines whether the transmission of the RF signal is terminated or not.

Step 420 is repeated until it is determined that the transmission should be terminated.

If determined that the transmission is to be terminated, in step 422, the control section 310 determines whether the receiving of the RF signal should be terminated.

Step 422 is repeated until it is determined that the receiving should be terminated.

If determined to be terminated, the processing proceeds to step 424.

The request of setting a carrier-wave time period is processed by the processing of steps 402 to 424 in the same manner as a tag-information request.

In step 424, the demodulator 354 of the receiving section 350 supplies the receive data to the data decoding section 342.

The data decoding section 342 decodes the receive data in accordance with a given coding system, decrypts the decoded data in accordance with a given encryption system, and supplies the determination that the data has been received and the decoded data to the control section 310.

The control section 310 compares the decoded time T and system ID with the time T and the system ID stored in the memory 314, and determines whether they match, thereby performing the authentication of the RFID tag 202.

In step 472, the control section 310 stores the decoded data into the memory 314, and transmits the data to the host apparatus 120.

In step 476, the control section 310 determines whether the transmission of the decoded data to the host apparatus 120 has been completed.

Step 476 is repeated until the transmission is completed.

If determined completed, the processing goes out from the routine.

On the other hand, in the positioning processing, in step 454, the control section 310 supplies the tag ID of the RFID tag requesting the transmission of an unmodulated carrier wave, a carrier-wave request command, and the related information to the data generation section 322.

The data generation section 322 encrypts the carrier-wave request command received from the control section 310, the current time T taken out from the memory 314, and data including the ID of the reader/writer apparatus 302 in accordance with a given encryption system using the encryption key Ke extracted from the memory 314. The data generation section 322 codes the encrypted data in accordance with a given coding system, generates a transmission frame, and supplies the frame to the transmission section 330.

In step 456, the transmission section 330 modulates the carrier by the transmission frame of the coded data in a time period of the transmission processing 42 in the positioning period 41 in Fig. 4A, and transmits the RF signal having a frequency f1.

In step 458, the control section 310 sets the timer 375 of the positioning carrier-wave time period in the timing generation section 360. The receiving section 350 waits for the reception of the RF signal carrying response data including the tag ID, waits for the reception of the unmodulated carrier wave having a frequency f2i (reception waiting 46), and receives the unmodulated carrier wave (receiving processing 49).

In step 460, the control section 210 determines whether data transmission should be terminated.

Step 460 is repeated until the data transmission is determined to be terminated.

If determined to be terminated, in step 462, the control section 310 determines whether the carrier-wave time period has passed in accordance with the timing from the timing generation section 360 by the timer 375.

Step 462 is repeated until determined that the time has passed.

The frequency converters 352 and 353 of the receiving section 350 down-converts (decreases frequency of) the two unmodulated carrier waves received through the two antennas 384 and 385 into intermediate frequencies, and the phase difference detector 356 detects the phase difference between the two intermediate frequency signals.

If determined that the carrier-wave time period has passed, the processing proceeds to step 464.

In step 464, the control section 310 terminates the receiving of the unmodulated carrier wave by the receiving section 350.

Further, the read section 312 of the control section 310 receives the phase difference data (PD) from the phase difference detector 356.

In step 472, the control section 310 stores the received phase difference data into the memory 314 together with the tag ID, and transmits the phase-difference value data, the ID of the reader/writer apparatus 312, and the tag ID to the host apparatus 120 through the LAN 50.

Referring to Fig. 7A, in step 502, when the RFID tag 202 is started, the control section 210 and the timing generation section 260 are enabled.

Once the RFID tag 202 is started, the control section 210 and the timing generation section 260 are always enabled and are in an active state.

The wake-up section 270 supplies a wake-up signal, which indicates the timing of performing carrier sense of the receive signal on a given cycle Tcs, to the control section 210 in accordance with the timer 274 and the time control sequence.

In step 504, the control section 210 determines whether the wake-up signal received from the wake-up section 270 indicates an on state (ON).

The control section 210 repeats step 504 until the wake-up signal becomes the on state.

In step 504, if determined that the wake-up signal indicates the on state (ON), in step 506, the control section 210 enables the receiving section 250 and the carrier determination section 246 only in a short duration period, for example, for about 1 ms to 10 ms.

The receiving section 250 becomes the reception waiting state of the RF signal. The carrier determination section 246 determines the existence of the carrier of the receive RF signal on the basis of the data indicating the received carrier power received from the receiving section 250, and supplies the determination result to the control section 210.

In step 508, the control section 210 determines whether the carrier has been detected in accordance with the determination result.

If determined that the carrier has not been detected, in step 509, the control section 210 disables the receiving section 250 and carrier determination section 246.

The processing proceeds to step 570 after that.

If determined that the carrier has been detected in step 508, in step 510, the control section 210 disables the carrier determination section 246. Further, the control section 210 receives (Fig. 4C, receiving 54 and 55) the RF signals having a frequency f1, and carrying a command from the reader/writer apparatus 302, while keeping the receiving section 250 enabled for a given duration, for example, 100 ms to 200 ms, and demodulates the received RF signal.

In step 512, the control section 210 determines whether the reception of the RF signal by the receiving section 250 has been completed.

Step 512 is repeated until the reception of the RF signal has been completed.

In step 512, if determined that the reception of the RF signal has been completed, in step 514, the control section 210 enables the data decoding section 242.

The data decoding section 242 receives the receive data from the receiving section 250 under the control of the control section 210, and decodes the data in accordance with a given coding system.

In step 516, the control section 210 disables the receiving section 250.

Referring to Fig. 7B, in step 518, the data decoding section 242 decrypts the decoded data extracted from the memory 214 using the encryption key/decryption key Ke in accordance with a given encryption system under the control of the control section 210, and supplies data including the decrypted command, tag ID (ID_tag), time T, and system ID to the control section 210.

After receiving the data, the control section 210 compares the decrypted time T and system ID with the time T and the system ID stored in the memory 214, and determines whether both of them match, thereby, authenticating the reader/writer apparatus 302.

The control section 210 receives the decoded and decrypted data including the tag-information request command or the carrier-wave request command from the data decoding section 242, processes the received command included in the decrypted data, and stores the access record by the reader/writer apparatus 302 into the memory 214.

If a carrier-wave setting request command is included in the receive data, the control section 210 stores or updates the length of the carrier-wave transmission time period in the memory 214.

In step 520, the control section 210 disables the data decoding section 242.

In step 532, the control section 210 determines whether the received command is a request for a tag ID.

If determined that the command is a request for a tag ID, the processing proceeds to step 534.

If determined that the command is not a request for a tag ID, in step 552, the control section 210 determines whether the received command is a carrier-wave request.

If determined that the received command is not a carrier-wave request, the processing proceeds to step 570.

If determined that the received command is a carrier-wave request, the processing proceeds to step 554.

In step 534, the control section 210 enables the data generation section 222 and the transmission section 230 in accordance with the tag-information request command in one time slot randomly selected from a given number of time slots in a given period.

The selected time slot is a time period of the transmission processing 56 in Fig. 4C.

In step 536, the data generation section 222 encrypts response data including the tag ID of the RFID tag 202, time T, and system ID, which are read from the memory 214, and the ID of the reader/writer apparatus 302 in accordance with a given encryption system using the encryption key Ke, codes the encrypted data in accordance with a given coding system to generate a response frame, and supplies the response frame to the modulator 232 of the transmission section 230.

The modulator 232 of the transmission section 230 modulates the carrier by the coded encrypted data frame, and transmits the RF signal having a frequency f2 or f2i through the antenna 284 (Fig. 4C, transmission 56).

The change of the frequency f2i is carried out by the frequency change section 212 of the control section 210.

The timing adjustment section 213 adjusts so that the cycles of a plurality of time slots become a required cycle.

In step 538, the control section 210 determines whether the transmission of the RF signal should be terminated.

Step 538 is repeated until determined to be terminated.

If determined to be terminated, in step 540, the control section 210 disables the data generation section 222 and the transmission section 230.

In step 570, the control section 210 sets the RFID tag 202 in a pause mode.

In the pause mode, a state in which only the control section 210 and the timing generation section 260 are basically enabled is maintained, and the other components 214 to 250 go into a disabled state.

On the other hand, in step 554, the control section 210 enables the transmission section 230 in the specified time period in accordance with the carrier-wave request command.

In step 556, the data generation section 222 encrypts response data including the tag ID of the RFID tag 202 and the ID of the reader/writer apparatus 302, codes the encrypted data to generate a response frame, and supplies the response frame to the modulator 232 of the transmission section 230.

The modulator 232 modulates the carrier by the coded encrypted data frame, and transmits the RF signal having a frequency f2 or f2i through the antenna 284 (Fig. 4C, transmission 56).

Next, the unmodulated carrier-wave generator 234 of the transmission section 230 generates an unmodulated carrier wave having a specified frequency f2i, and transmits the wave through the antenna 282 (transmission processing 59).

As an alternative configuration, the modulator 232 may generate and transmit an unmodulated carrier wave without receiving data from the data generation section 222.

In step 558, the control section 210 determines whether the time period (transmission processing 59) of the transmission of an unmodulated carrier wave has passed in accordance with the timing signal from the timing generation section 260 by the timer 275.

Step 558 is repeated until it is determined that the time period has passed.

If determined that the time period has passed, in step 560, the control section 210 disables the transmission section 250.

The processing proceeds to step 570 after that.

The configuration and the operation of the active RFID tag 202 and the reader/writer apparatus 302 have been partly disclosed in Japanese Unexamined Patent Application Publication No. 2006-338489 (A)(corresponding to US2006/276206-A1).

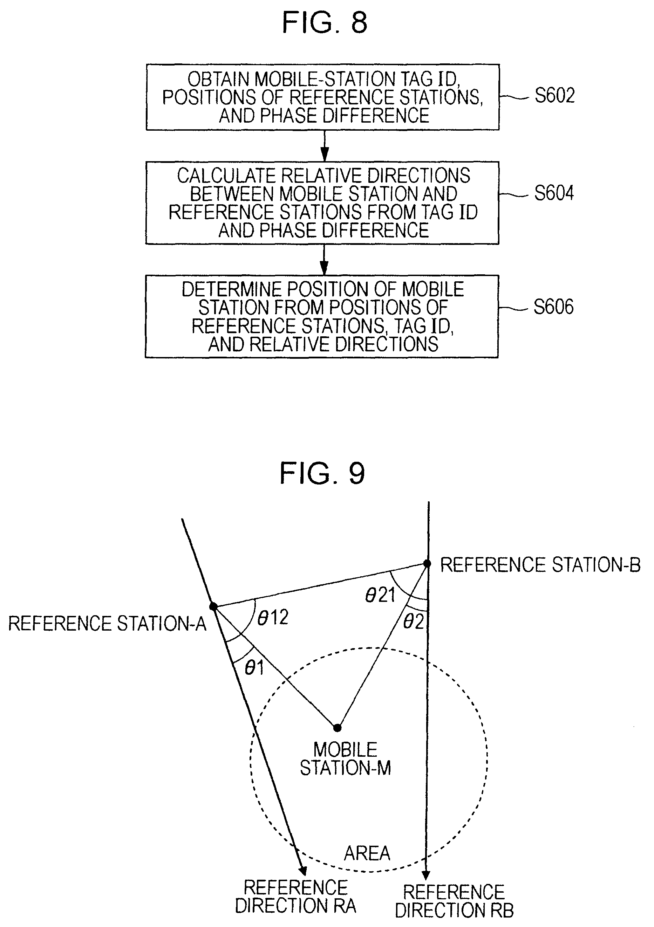

Fig. 8 illustrates a flowchart of processing by the position-determination section 128 or the processor 122 of the host apparatus 120 for determining the position of the RFID tag 202 as a mobile station on the basis of the phase difference of the unmodulated carrier waves detected by individual phase-difference detectors 356 of the reader/writer apparatuses 302 to 308 as reference stations.

In step 602 in Fig. 8, the position determination section 128 or the processor 122 obtains the tag ID of the RFID tag 202 from the memory 124, the positions and reference directions R of the reader/writer apparatuses 302 to 308, and the phase difference (PD) value of the unmodulated carrier waves.

In step 604, the position determination section 128 or the processor 122 obtains the relative angular direction θ of the mobile-station RFID tag 202 with respect to the reference direction R in the reference-station reader/writer apparatuses 302 to 308 from the phase difference between the tag ID and the phase difference.

In step 606, the position determination section 128 or the processor 122 determines the position of the mobile-station RFID tag 202 from the known positions and reference directions R of the reference-station reader/writer apparatuses 302 to 308, the received tag ID, and the relative angular direction θ.

Fig. 9 serves for explaining a method of determining a position (x, y) of the mobile station M in accordance with the angular directions θ1 and θ2 of one mobile station M individually obtained in individual areas with respect to two reference stations A and B.

The position of the mobile station M is determined by at least two angular directions obtained for the mobile station M.

The known positions of the two reference nodes A and B and the reference angular directions RA and RB are stored in the memory 124.

In Fig. 9, it is assumed that the two reference stations A and B individually have reference angular directions RA and RB.

The angular directions individually obtained between the individual reference directions RA and RB at the two reference stations A and B and the mobile station M are assumed to be θ1 and θ2, respectively.

The two reference communication nodes A and B are two of the reference stations 302 to 308 in Fig. 1.

If the reference angular directions RA and RB of the two reference stations A and B are determined independently with each other (irrelevantly), the position of the mobile station M can be uniquely determined as follows. The angular direction θ12 between the reference direction RA at one of the reference stations A and the other of the nodes B and the angular direction θ21 between the reference direction RB at the other of the reference stations B and the one of the reference stations A are obtained. Thus, the mobile station M can be uniquely determined from the known positions of the two reference stations A and B, the obtained angular direction θ12, θ21, θ1 and θ2, and (θ12 - θ1) and (θ21 - θ2).

In order to obtain the angular directions θ12 and θ21, each of the reference stations A and B receives an RF signal including the transmission destination ID transmitted from the other of the reference station B or A.

On the other hand, it is assumed that the individual reference angular directions at the positions of the two reference stations A and B or a relative direction between the directions RA and RB is known. If the reference stations A and B are disposed such that a line connecting the positions of the reference stations A and B is located outside of the area, since the positions of the two reference stations A and B are known, it is possible to uniquely determine the position of the mobile station M from the known positions and the angular directions θ1 and θ2 obtained with respect to the reference directions RA and RB, respectively.

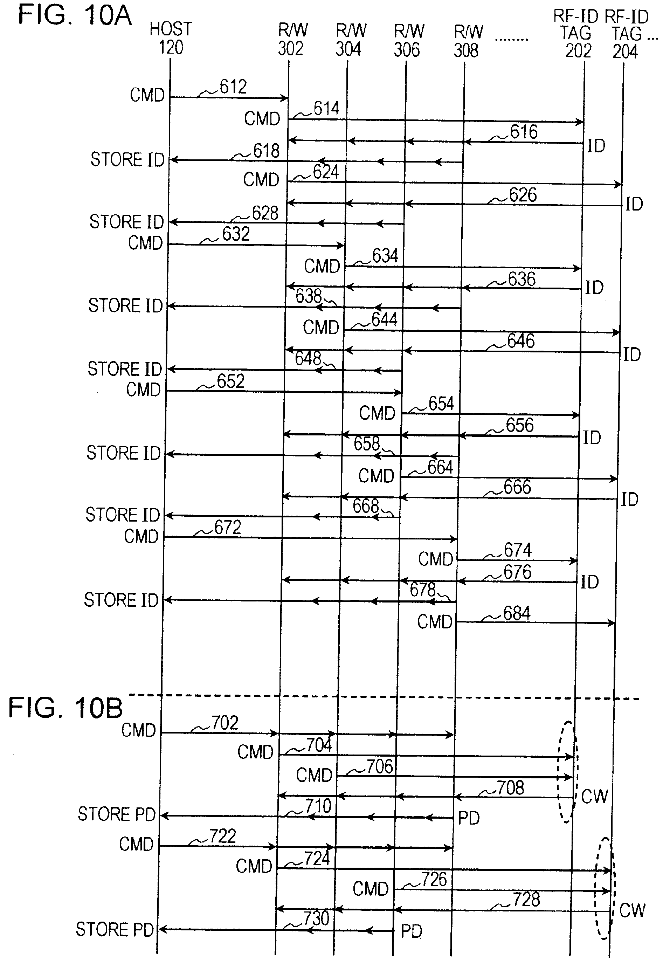

Figs. 10A and 10B illustrate a communication procedure among the host apparatus 120, the reader/writer apparatuses 302 to 308, and the RFID tags 202 and 204 in the tag-information access period 40 and the positioning period 41.

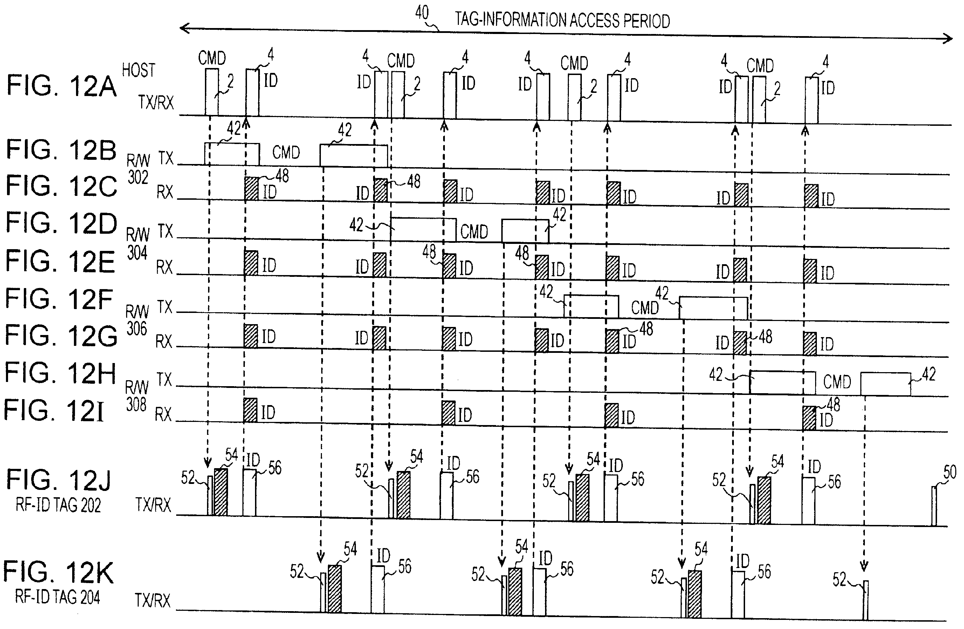

Fig. 12A illustrates a time chart of tag-information requesting 2 of the host apparatus 120 and received-tag (ID) information processing 4 in the procedure in Fig. 10A.

Figs. 12B to 12I illustrate a time chart of transmission processing 42 of RF signals carrying tag-information request commands (CMD) of the individual reader/writer apparatuses 302 to 308 and receiving processing 48 of receive response RF signals in the procedure in Fig. 10A.

Figs. 12J and 12K illustrate a time chart of carrier sense 50 and 52 of the active RFID tags 202 and 204, receiving processing 54 of receive RF signals, and transmission processing 56 of RF signals carrying responses in the procedure in Fig. 10A.

Referring to Fig. 10A and Figs. 12A to 12K, the command management section 126 of the host apparatus 120 transmits a tag information request or a tag-ID request command (CMD) 2 to the reader/writer apparatuses 302 to 308 in steps 612, 632, 652 and 672 in sequence through the LAN 50.

In step 612, the host apparatus 120 (command management section 126) transmits the tag-information request command 2 to the reader/writer apparatus 302.

In step 614, in response to the request command, the reader/writer apparatus 302 periodically transmits the RF signal carrying the tag information request or the tag-ID command 42.

The reader/writer apparatus 302 continues to transmit the RF signal until the passing of the transmission time period at the maximum or until the receiving of a response RF signal from any of the RFID tags before the passing.

For example, the RFID tag 202 receives the RF signal in the receiving period 54, and processes the tag-information request command.

In step 616, in response to the tag information request command, the RFID tag 202 (control section 210) transmits back the response RF signal carrying the response data 56 including the tag ID.

The reader/writer apparatuses 302 to 308 (control section 310), which has received the response RF signal, processes the response data.

In step 618, the reader/writer apparatus 302 to 308, which has received the response RF signal, transmits data, such as the tag ID, etc., of the received RFID tag 202, to the host apparatus 120 through the LAN 50.

The command management section 126 of the host apparatus 120 stores and manages the data, such as the tag ID of the RFID tag 202, etc., together with the IDs of the reader/writer apparatuses 302 to 308 that have received the response RF signal into the memory 124.

In step 624, the reader/writer apparatus 302 periodically transmits again the RF signal carrying the tag-information request or the tag-ID request command 42.

The reader/writer apparatus 302 continues to transmit the RF signal until the passing of the transmission time period at the maximum or until the receiving of a response RF signal from any of the RFID tags before the passing.

For example, the RFID tag 204 receives the RF signal in the receiving period 54, and processes the tag-information request command.

In step 626, in response to the tag information request command, the RFID tag 204 (control section 210) transmits back the response RF signal carrying the response data 56 including the tag ID.

The reader/writer apparatuses 302 to 308 (control section 310), which has received the response RF signal, processes the response data.

In step 628, the reader/writer apparatuses 302 to 306, which have received the response RF signal, transmit data, such as the tag ID, etc., of the received RFID tag 204, to the host apparatus 120 through the LAN 50.

The command management section 126 of the host apparatus 120 stores and manages the data, such as the tag ID of the RFID tag 204, etc., together with the IDs of the reader/writer apparatuses 302 to 308 that have received the response RF signal into the memory 124.

In step 632, the host apparatus 120 (command management section 126) transmits the tag information request command 2 to the reader/writer apparatus 304.

In steps 634 and 644, the reader/writer apparatus 304 operates in the same manner as steps 614 and 624 of the reader/writer apparatus 302.

Steps 636 to 638 and 646 to 648 are the same as steps 616 to 618 and 626 to 628, respectively.

In step 652, the host apparatus 120 (command management section 126) transmits the tag-information request command 2 to the reader/writer apparatus 306.

In steps 654 and 664, the reader/writer apparatus 304 operates in the same manner as steps 614 and 624 of the reader/writer apparatus 302.

Steps 656 to 658 and 666 to 668 are the same as steps 616 to 618 and 626 to 628, respectively.

In step 672, the host apparatus 120 (command management section 126) transmits the tag-information request command 2 to the reader/writer apparatus 308.

In steps 674 and 684, the reader/writer apparatus 308 operates in the same manner as steps 614 and 624 of the reader/writer apparatus 302.

However, in step 684, for example, the RFID tag 204 in the area B62 does not receive the RF signal from the reader/writer apparatus 304 that does not cover the area B62.

Steps 676 to 678 are the same as steps 616 to 618, respectively.

In this manner, the command management section 126 of the host apparatus 120 stores and manages the data, such as the tag IDs of the RFID tags 202 and 204, etc., into the memory 124.

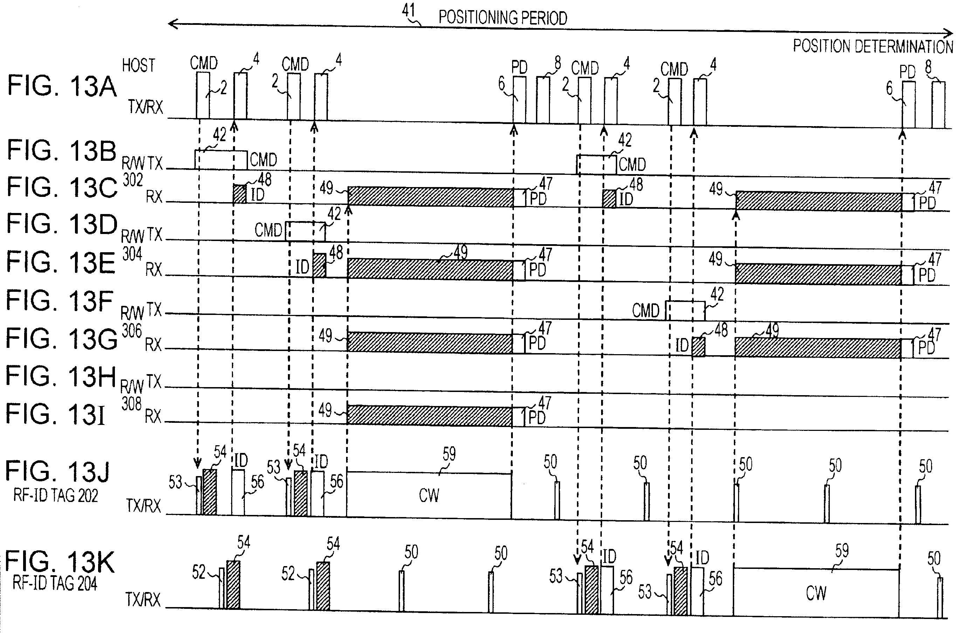

Fig. 13A illustrates a time chart of the positioning request 2 of the host apparatus 120, the received phase-difference data processing 4, and the RFID-tag-position determination processing 8 in the procedure in Fig. 10B.

Figs. 13B to 13I illustrate a time chart of the transmission processing 42 of RF signals carrying carrier-wave request commands (CMD) of the individual reader/writer apparatuses 302 to 308, the receiving processing 48 of receive response RF signals, the receiving processing 49 of the received unmodulated carrier wave, and the transmission processing 47 of detected phase difference in the procedure in Fig. 10B.

Figs. 13J and 13K illustrate a time chart of carrier sense 50, 52 and 53 of the active RFID tags 202 and 204, receiving processing 54 of receive RF signals, transmission processing 56 of RF signals carrying responses, and transmission processing 59 of the unmodulated carrier wave in the procedure in Fig. 10B.

Referring to Figs. 10B and Fig. 13A to 13K, the command management section 126 of the host apparatus 120 transmits in sequence a positioning request command 2 for a specific RFID tag 202 or 204 to one of or some of the reader/writer apparatuses 302 to 306, which have received the tag ID, out of the reader/writer apparatuses 302 to 308 in each of steps 702 and 722 through the LAN 50.

In step 702, the host apparatus 120 (command management section 126) transmits the positioning request command (CMD) 2 to the reader/writer apparatuses 302 and 304 together with the ID of the reader/writer apparatus, the tag ID of a specific RFID tag 202, and information (start time and duration) on the carrier-wave time period if necessary.

In step 704, the reader/writer apparatus 302 transmits the RF signal carrying the carrier-wave request command (CMD) 42 including the tag ID of the RFID tag 202, and information on the carrier-wave time period to a specific RFID tag 202 if necessary.

In step 706, the reader/writer apparatus 304 transmits, to a specific RFID tag 202, the RF signal carrying the tag ID of the RFID tag 202 and the carrier-wave request command (CMD) 42 including information on the carrier-wave time period if necessary.

In step 708, in response to the carrier-wave request command 42 from the reader/writer apparatuses 302 and 304, the RFID tag 202 (control section 210) sets the carrier-wave time period stored in the memory 214 in the timer 275 of the timing generator 260.

When receiving information on the carrier-wave time period, the RFID tag 202 (control section 210) stores the information into the memory 214 in advance.

Next, the RFID tag 202 (control section 210) transmits back the response RF signal carrying the response data 56 including the tag ID.

Further, the RFID tag 202 (control section 210) transmits back an unmodulated carrier wave (CW) having a frequency f2i immediately or at start time in the carrier-wave time period 59 (for example, for 4 or 8 seconds) in accordance with the timing from the timing generator 260 by the set timer 275.

All of or some of the reader/writer apparatuses 302 to 308 (receiving section 350) receive the unmodulated carrier wave (CW) in the receiving processing period 49, and generates the phase difference (PD).

In step 710, each of the reader/writer apparatuses 302 to 308 that have received the unmodulated carrier wave transmits the phase difference (PD) data detected by the reader/writer apparatuses 302 to 308 to the host apparatus 120 together with the tag ID of the RFID tag 202 and the IDs of the reader/writer apparatuses 302 to 308 through the LAN 50.

The command management section 126 of the host apparatus 120 receives the tag ID of a specific RFID tag 202, the IDs of the reader/writer apparatuses 302 to 308, and the individual phase difference (PD) data, and stores and manages the IDs of the reader/writer apparatuses 302 to 308 and the individual phase difference (PD) data at the positions into the memory 124 in connection with the tag ID of the specific RFID tag 202.

The position determination section 128 of the host apparatus 120 processes the phase difference (PD) data received by the reader/writer apparatuses 302 to 308 in the time period of the position determination processing 8 of the RFID tag on the basis of the phase difference data, etc., stored in the memory 124, and determines the position of the mobile RFID tag 202.

In step 722, the host apparatus 120 (command management section 126) transmits the positioning request command (CMD) 2 to the reader/writer apparatuses 302 and 306 together with the ID of the reader/writer apparatus, the tag ID of a specific RFID tag 204, and the information (start time and duration) on the carrier-wave time period if necessary.

In step 724, the reader/writer apparatus 302 transmits the RF signal carrying the carrier-wave request command (CMD) 42 including the tag ID of the RFID tag 204, and the information on the carrier-wave time period if necessary to a specific RFID tag 204.

In step 726, the reader/writer apparatus 306 transmits, to a specific RFID tag 204, the RF signal carrying the tag ID of the RFID tag 204 and the carrier-wave request command (CMD) 42 including the information on the carrier-wave time period if necessary.

In step 728, in response to the carrier-wave request command (CMD) 42, when receiving information on the carrier-wave time period, the RFID tag 204 (control section 210) stores the information into the memory 214, and sets the carrier-wave time period stored in the memory 214 in the timer 275 of the timing generator 260.

Next, the RFID tag 204 (control section 210) sets the carrier-wave time period in the timer 275 of the timing generator 260, and transmits back the response RF signal carrying the response data 56 including the tag ID.

Further, the RFID tag 204 (control section 210) transmits back an unmodulated carrier wave (CW) having a frequency f2i immediately or at start time in the carrier-wave time period 59 in accordance with the timing from the timing generator 260 by the set timer 275.

All of or some of (302 to 306) the reader/writer apparatuses 302 to 308 (receiving section 350) receive the unmodulated carrier wave (CW) in the receiving processing period 49, and generate the phase difference (PD).

However, the reader/writer apparatus 304 that does not cover the area B62 does not receive the unmodulated carrier wave from the RFID tag 204 in the area B62.

In step 730, each of the reader/writer apparatuses 302 to 306 that has received the unmodulated carrier wave transmits the phase difference (PD) data detected by the reader/writer apparatuses 302 to 306 to the host apparatus 120 together with the tag ID of the RFID tag 204 and the IDs of the reader/writer apparatuses 302 to 306 through the LAN 50.

The command management section 126 of the host apparatus 120 stores and manages the IDs of the reader/writer apparatuses 302 to 306 and the individual phase difference (PD) data at the positions into the memory 124 in connection with the tag ID of the specific RFID tag 204.

The position determination section 128 of the host apparatus 120 processes the phase difference (PD) data received by the reader/writer apparatuses 302 to 306 in the time period of the position determination processing 8 of the RFID tag on the basis of the phase difference data, etc., stored in the memory 124, and determines the position of the mobile RFID tag 204.

In this manner, a specific RFID tag transmits an unmodulated carrier wave in a specific carrier-wave time period so that the reader/writer apparatuses 302 to 308 can receive the unmodulated carrier wave without interference from the specific RFID tags 202 and 204.

Also, a plurality of reader/writer apparatuses 302 to 308 receive the unmodulated carrier wave from specific RFID tags 202 or 204 so that the host apparatus 120 can determine the position for each of the specific RFID tag 202 or 204.

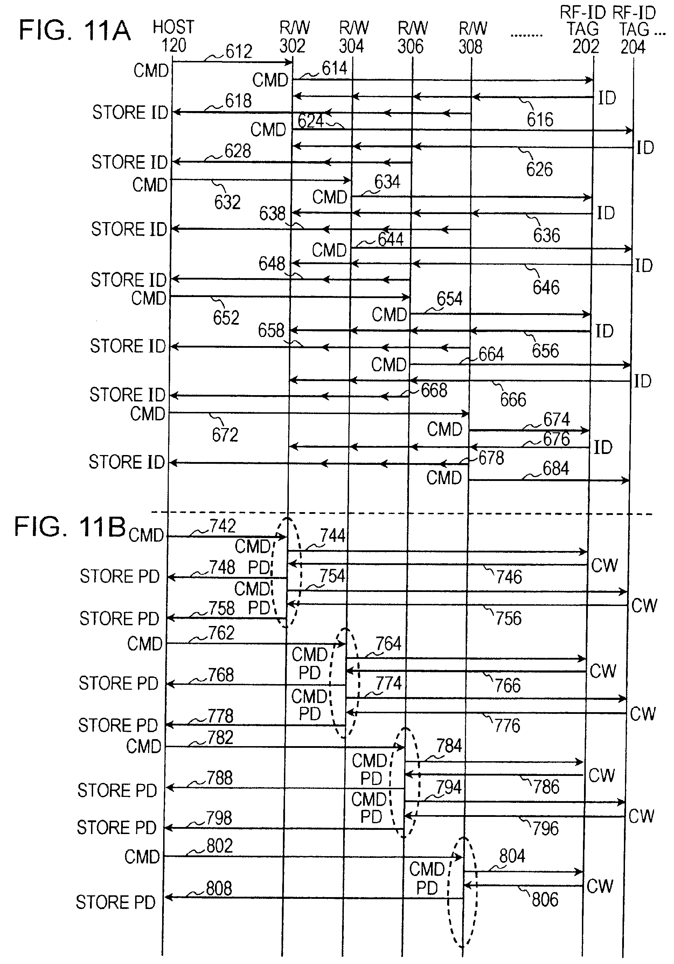

Figs. 11A and 11B illustrate another communication procedure among the host apparatus 120, the reader/writer apparatuses 302 to 308, and the RFID tags 202 and 204 in the tag-information access period 40 and the positioning period 41.

Referring to Fig. 11A, steps 612 to 688 are the same as those in Fig. 10A.

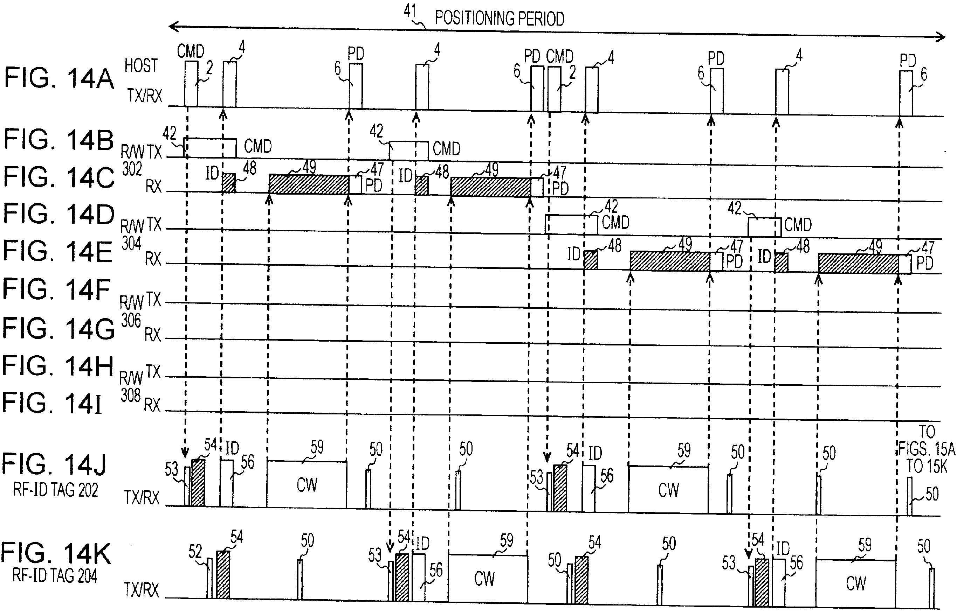

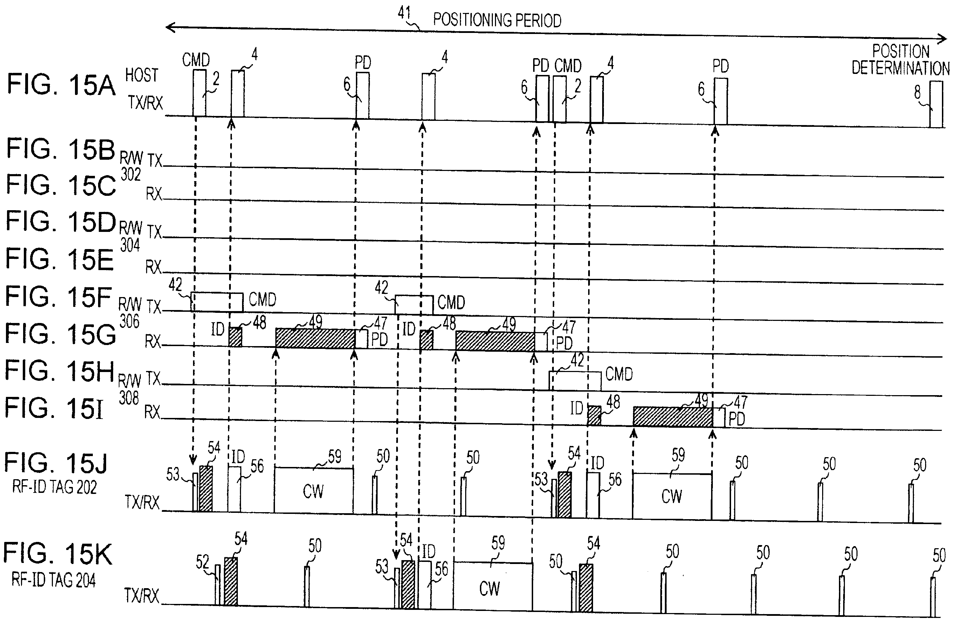

Figs. 14A and 15A illustrate time charts of positioning request 2 of the host apparatus 120, received phase-difference data processing 4, and RFID-tag-position determination processing 8 in the procedure in Fig. 11B.

Figs. 14B to 14I and 15B to 15I illustrate a time chart of the transmission processing 42 of RF signals carrying carrier-wave request commands (CMD) of the individual reader/writer apparatuses 302 to 308, the receiving processing 48 of receive RF signals, the receiving processing 49 of the received unmodulated carrier wave, and the transmission processing 47 of detected phase difference in the procedure in Fig. 11B.

Figs. 14J, 14K, 15J and 15K illustrate time charts of carrier sense 50, 52 and 53 of the active RFID tags 202 and 204, the receiving processing 54 of the receive RF signals, the transmission processing 56 of the RF signals carrying responses, and the transmission processing 59 of the unmodulated carrier wave in the procedure in Fig. 11B.

Referring to Fig. 11B and Fig. 14A to 14K, the command management section 126 of the host apparatus 120 transmits the positioning request command (CMD) 2 for a specific RFID tag 202 and 204 to one of or some of the reader/writer apparatuses 302 to 306, which have received the tag ID, out of the reader/writer apparatuses 302 to 308 in steps 742, 762, 782 and 802 through the LAN 50.

In step 742, the host apparatus 120 (command management section 126) transmits the positioning request command (CMD) 2 to a first reader/writer apparatus 302 out of the reader/writer apparatuses 302 to 308 together with the ID of the reader/writer apparatus, the tag ID of specific RFID tags 202 and 204, and individual pieces of information (different start time and duration) on the carrier-wave time period if necessary.

In step 744, in response to the command, the reader/writer apparatus 302 transmits the RF signal carrying the tag ID of the RFID tag 202, and the carrier-wave request command (CMD) 42 including the carrier-wave time period if necessary to the RFID tag 202.

In step 746, in response to the carrier-wave request command 42, the RFID tag 202 (control section 210) sets the carrier-wave time period stored in the memory 214 in the timer 275 of the timing generator 260.

When receiving information on the carrier-wave time period, the RFID tag 202 (control section 210) stores the information into the memory 214 in advance.

Next, the RFID tag 202 (control section 210) transmits back the response RF signal carrying the response data 56 including the tag ID.

Further, the RFID tag 202 (control section 210) transmits back an unmodulated carrier wave (CW) having a frequency f2i immediately or at start time in the carrier-wave time period 59 (for example, for 4 or 8 seconds) in accordance with the timing from the timing generator 260 by the set timer 275.

The reader/writer apparatus 302 (receiving section 350) receives the unmodulated carrier wave (CW) in the receiving processing period 49, and generates the phase difference (PD).

In step 748, the reader/writer apparatus 302 transmits the phase difference (PD) data detected by the reader/writer apparatus 302 to the host apparatus 120 together with the tag ID of the RFID tag 202 and the ID of the reader/writer apparatus 302 through the LAN 50.

The command management section 126 of the host apparatus 120 receives the tag ID of a specific RFID tag 202, the IDs of the reader/writer apparatus 302, and the individual phase difference (PD) data, and stores and manages the ID of the reader/writer apparatus 302 and the individual phase difference (PD) data at the position into the memory 124 in connection with the tag ID of the specific RFID tag 202.

In step 754, in response to the command, the reader/writer apparatus 302 transmits the RF signal carrying the carrier-wave request command (CMD) 42 including the tag ID of the RFID tag 204 and the carrier-wave time period, if necessary, to the specific RFID tag 204.

In step 756, in response to the carrier-wave request command 42, the RFID tag 204 (control section 210) sets the carrier-wave time period stored in the memory 214 in the timer 275 of the timing generator 260.

When receiving information on the carrier-wave time period, the RFID tag 204 (control section 210) stores the information into the memory 214 in advance.

Next, the RFID tag 204 (control section 210) transmits back the response RF signal carrying the response data 56 including the tag ID.

Further, the RFID tag 204 (control section 210) transmits back an unmodulated carrier wave (CW) having a frequency f2i immediately or at start time in the carrier-wave time period 59 in accordance with the timing from the timing generator 260 by the set timer 275.

The reader/writer apparatus 302 (receiving section 350) receives the unmodulated carrier wave (CW) in the receiving processing period 49, and generates the phase difference (PD).

In step 758, the reader/writer apparatus 302 transmits the phase difference (PD) data detected by the reader/writer apparatus 302 to the host apparatus 120 together with the tag ID of the RFID tag 202 and the ID of the reader/writer apparatus 302 through the LAN 50.

The command management section 126 of the host apparatus 120 receives the tag ID of a specific RFID tag 204, the IDs of the reader/writer apparatus 302, and the individual phase difference (PD) data, and stores and manages the ID of the reader/writer apparatus 302 and the individual phase difference (PD) data at the position into the memory 124 in connection with the tag ID of the specific RFID tag 204.

In step 762, the host apparatus 120 (command management section 126) transmits the positioning request command (CMD) 2 to the next one reader/writer apparatus 304 out of the reader/writer apparatuses 302 to 308 in the same manner as in step 742.

Steps 764 to 778 are the same as steps 744 to 758.

In steps 764 to 778, the reader/writer apparatus 304 operates in the same manner as the reader/writer apparatus 302 in steps 744 to 758.

Referring to Fig. 11B and Figs. 15A to 15K, in step 782, the host apparatus 120 (command management section 126) transmits the positioning request command (CMD) 2 to one reader/writer apparatus 306 out of the reader/writer apparatuses 302 to 308 in the same manner as in step 742.

Steps 784 to 798 are the same as steps 744 to 758.

In steps 784 to 798, the reader/writer apparatus 304 operates in the same manner as the reader/writer apparatus 302 in steps 744 to 758.

In step 802, the host apparatus 120 (command management section 126) transmits the positioning request command (CMD) 2 to one reader/writer apparatus 308 out of the reader/writer apparatuses 302 to 308 in the same manner as in step 742.

Steps 804 to 808 are the same as steps 744 to 748.

In steps 804 to 808, the reader/writer apparatus 304 operates in the same manner as the reader/writer apparatus 302 in steps 744 to 748.

In this case, the reader/writer apparatus 308 has not received the tag ID from the RFID tag 204 in Fig. 11A, and thus the reader/writer apparatus 308 does not transmit the RF signal carrying carrier-wave request command 42 to the RFID tag 204.

In the time period of the position determination processing 8 in Fig. 15A, the position determination section 128 of the host apparatus 120 processes the phase difference (PD) data for each of the tag IDs of individual RFID tags 202 and 204 in the reader/writer apparatuses 302 to 308 on the basis of the phase difference data, etc., stored in the memory 124, and determines the positions of the individual mobile RFID tags 202 and 204.

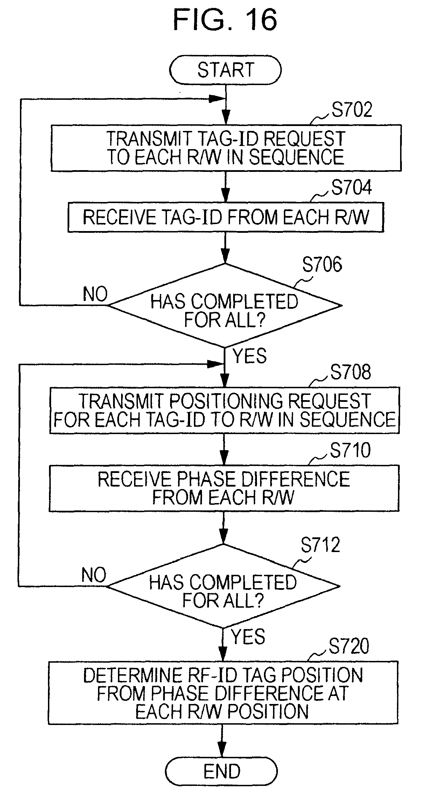

Fig. 16 illustrates a flowchart of processing executed by the host apparatus 120 for requesting tag information, receiving tag information, requesting positioning, collecting phase-difference data, and determining positions of RFID tags 202 and 204.

In step 702, the command management section 126 of the host apparatus 120 transmits the tag-ID request command to the reader/writer apparatuses 302 to 308 through the LAN 50.

In step 704, the command management section 126 receives the tag IDs of the RFID tags 202 and 204 from the reader/writer apparatuses 302 to 308.

The command management section 126 stores and manages the IDs of the reader/writer apparatuses 302 to 308 and the individual position data (coordinate data) into the memory 124 in connection with the tag ID of the individual RFID tags 202 and 204.

If the tag ID of the RFID tag 204 is received from the reader/writer apparatuses 302 to 306, and the tag ID of the RFID tag 204 is not received from the reader/writer apparatus 308, the command management section 126 stores and manages the IDs of the reader/writer apparatus 302 to 306 and the individual position data in the memory 124 in connection with the tag ID of the RFID tag 204.

In step 706, the command management section 126 determines whether the transmission of the tag-ID request command to all the reader/writer apparatuses 302 to 308 has been completed.

Steps 702 to 706 are repeated until the transmission of the tag-ID request to all the reader/writer apparatuses 302 to 308 has been completed.

If determined that the tag-ID requests to all the reader/writer apparatus 302 to 308 have been transmitted, the processing proceeds to step 708.

In step 708, the command management section 126 of the host apparatus 120 transmits, in sequence through the LAN 50, the positioning request commands for the RFID tags 202 and 204 to a plurality of reader/writer apparatuses 302 to 308 together with one tag ID and the carrier-wave time period if necessary (Fig. 10B).

As an alternative configuration, the command management section 126 may transmit positioning request commands for the RFID tags 202 and 204 to each of the reader/writer apparatuses 302 to 308 together with a plurality of tag IDs and the carrier-wave time period if necessary (Fig. 11 B).

In step 710, the command management section 126 receives the tag ID of either RFID tag 202 or 204, the IDs of a plurality of the reader/writer apparatuses 302 to 308, and the phase difference (PD) data at the individual positions, and stores and manages the IDs of the plurality of the reader/writer apparatuses 302 to 308 and the individual phase difference (PD) data at the positions into the memory 124 in connection with the tag IDs of the RFID tags 202 and 204.

In step 712, the command management section 126 determines whether the transmission of the positioning request commands to all the reader/writer apparatuses 302 to 308 has been completed.

Steps 708 to 712 are repeated until the transmission of the positioning request to all the reader/writer apparatuses 302 to 308 has been completed.

If determined that the positioning requests to all the reader/writer apparatuses 302 to 308 have been transmitted, the processing proceeds to step 720.

In step 720, the position determination section 128 of the host apparatus 120 processes the tag IDs and the IDs of a plurality of the reader/writer apparatuses stored in the memory 124, the position data, and the received phase difference (PD) data, and determines the positions of the mobile RFID tags 202 and 204.

In the above, a description has been given in relation to an RFID tag. However, the present invention is not limited to this. It will be understood by experts in this field that the present invention can be applied to non-contact IC cards as well.

The above-described embodiments are given only as typical examples. It will be obvious to those skilled in the art that any combinations of the components of the individual embodiments, alterations and variations thereof may be made. Accordingly, it will be obvious to those skilled in the art that various alterations of the above-described embodiments are possible within the scope of the appended claims without departing from the scope of the present invention.
In any of the above aspects, the various features may be implemented in hardware, or as software modules running on one or more processors. Features of one aspect may be applied to any of the other aspects.
The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

## Claims

1. An RFID system, comprising:
a mobile radio apparatus (202); and
a reference radio apparatus (302, 304) configured for radio communication with the mobile radio apparatus, the reference radio apparatus including:
a first memory (314),
at least two reception antennas (384, 385),
a first timing generation section (360) configured to measure time,
a first transmission section (330) configured to transmit, in a first period, an information-request signal requesting transmission of identification information of the mobile radio apparatus, and after receiving a response to the information-request signal, to transmit, in a second period, an unmodulated-carrier-wave request signal including the identification information and requesting transmission of an unmodulated carrier wave to be used for positioning the mobile radio apparatus, and time period data of a third period including a start time and duration of the third period, the third period being for the requested transmission of the unmodulated carrier wave and specific to the mobile radio apparatus from which the response to the information-request signal was received,
a first receiving section (350) configured to receive a response signal carrying the identification information, to receive the unmodulated carrier wave in the third period determined by time-period data stored in the first memory in accordance with timing from the first timing generation section, and to detect a phase difference between the unmodulated carrier wave received at each of the at least two reception antennas, and
a first control section (310) configured to output the received identification information, to generate data indicating the detected phase difference of the unmodulated carrier wave, and to output the data; and
the mobile radio apparatus including:
a second memory (214) configured to store the identification information of the mobile radio apparatus,
a second timing generation section (260) configured to measure time,
a second receiving section (250) configured to receive the information-request signal and to receive the unmodulated-carrier-wave request signal, the second memory (214) being configured to store the time period data of the third period included in the unmodulated-carrier-wave-request signal, and
a second transmission section (230) configured to transmit a response signal carrying the identification information in the second memory as the response to receiving the information-request signal, and to transmit, in the third period determined by the time period data received in the unmodulated-carrier-wave request signal and stored in the second memory, the unmodulated carrier wave in accordance with timing from the second timing generation section in response to receiving the unmodulated-carrier-wave request signal.

2. A radio apparatus (202) capable of being used in an RFID system, the apparatus comprising:
a memory (214) configured to store identification information of the radio apparatus;
a timing generation section (260) configured to measure time;
a receiving section (250) configured to receive an information-request signal requesting transmission of the identification information of the radio apparatus, and
a transmission section (230) configured to transmit a response signal carrying the identification information in the memory in response to receiving the information-request signal; wherein
the receiving section (250) is further configured, after the transmission section has transmitted the response signal, to receive an unmodulated-carrier-wave request signal including the identification information and requesting transmission of an unmodulated carrier wave to be used for positioning the radio apparatus and time period data of a third period including a start time and duration of the third period, the third period being for the requested transmission of the unmodulated carrier wave and specific to the radio apparatus (202);
the memory (214) is further configured to store the time period data of the third period included in the unmodulated-carrier-wave request signal; and
the transmission section is further configured to transmit the unmodulated carrier wave in the third period determined by the time period data of the third period stored in the memory in accordance with timing from the timing generation section in response to receiving the unmodulated-carrier-wave request signal.

3. The radio apparatus according to claim 2,
wherein the receiving section is configured to receive an RF signal having a first frequency, and
the transmission section configured to transmit an RF signal having a second frequency different from the first frequency.

4. A radio apparatus (302, 304) configured for radio communication with a mobile radio apparatus capable of being used in an RFID system, the radio apparatus comprising:
a memory (314);
at least two reception antennas (384, 385);
a timing generation section (360) configured to measure time;
a transmission section (330) configured to transmit, in a first period, an information-request signal requesting transmission of identification information of the mobile radio apparatus, and after receiving a response to the information-request signal, to transmit, in a second period, an unmodulated-carrier-wave request signal including the identification information and requesting transmission of an unmodulated carrier wave to be used for positioning the mobile radio apparatus and time period data of a third period including a start time and duration of the third period, the third period being for the requested transmission of the unmodulated carrier wave and specific to the mobile radio apparatus from which the response to the information-request signal was received;
a receiving section (350) configured to receive a response signal carrying the identification information, to receive an unmodulated carrier wave in the third period determined by time-period data stored in the memory in accordance with timing from the timing generation section, and to detect a phase difference between the unmodulated carrier wave received at each of the at least two reception antennas; and
a control section (310) configured to output the received identification information, and to generate data indicating the detected phase difference of the unmodulated carrier wave.

5. The radio apparatus according to claim 4,
wherein the transmission section is configured to transmit an RF signal having a first frequency, and the receiving section is configured to receive an RF signal having a second frequency different from the first frequency.

6. The radio apparatus according to claim 2 or 3, further comprising a control section configured to control the receiving section so as to carrier-sense and detect the information-request signal or the unmodulated-carrier-wave request signal at certain intervals, and
when the receiving section detects carrier, the control section is configured to control the receiving section to operate to further receive the information-request signal or the unmodulated-carrier-wave request signal.

7. The radio apparatus according to claim 2 or 3,
wherein the transmission section includes a modulation section configured to modulate a carrier with transmission data, and a carrier-wave generation section configured to generate an unmodulated carrier wave.

8. The radio apparatus according to claim 2 or 3,
wherein the receiving section includes a demodulation section (354) configured to demodulate the received RF signal through both of or one of two antennas, and a phase-difference detection section (356) configured to detect a phase difference of the unmodulated carrier waves received through the two antennas, and to supply the phase difference to the control section.

9. An RFID system comprising:
the radio apparatus according to claim 4 as a reference radio apparatus, wherein the control section of said radio apparatus is also operable to output the data indicating the detected phase difference of the unmodulated carrier wave; and
the radio apparatus of claim 2 as a mobile radio apparatus.

## Patentansprüche

1. Ein RFID-System, umfassend:
eine mobile Funkvorrichtung (202); und
eine Referenzfunkvorrichtung (302, 304), welche zur Funkkommunikation mit der mobilen Funkvorrichtung vorgesehen ist, wobei die Referenzfunkvorrichtung umfasst :
einen ersten Speicher (314),
zumindest zwei Empfangsantennen (384, 385),
einen ersten Abschnitt zur Erzeugung von Zeiträumen (360), welcher zur Zeitmessung vorgesehen ist,
einen ersten Übertragungsabschnitt (330) zur Übertragung in einem ersten Zeitraum eines Signals zur Informationsanfrage, welche die Übertragung einer Information zur Identifizierung der mobilen Funkvorrichtung anfordert, und zum Übermitteln in einem zweiten Zeitraum, nach Erhalt der Antwort zu dem Signal der Informationsabfrage, eines Anforderungssignals einer unmodulierten Trägerwelle, welches die Information zur Identifizierung beinhaltet und die Übertragung einer unmodulierten Trägerwelle zur Verwendung für eine Positionierung der mobilen Funkvorrichtung anfordert und
von Zeitrasterdaten eines dritten Zeitraums, welche eine Startzeit und Dauer des dritten Zeitraums umfassen, wobei der dritte Zeitraum vorgesehen ist für die angeforderte Übertragung der unmodulierten Trägerwelle und spezifisch ist für die mobile Funkvorrichtung, von der die Antwort des Signals zur Informationsanfrage empfangen wird,
einen ersten Empfangsabschnitt (350), welcher angeordnet ist zum Empfangen eines Antwortsignals, welches die Information zur Identifizierung trägt, zum Empfangen der unmodulierten Trägerwelle im dritten Zeitraum, welcher durch die Zeitrasterdaten bestimmt ist, die in dem ersten Speicher entsprechend der Zeiteinteilung des ersten Abschnitts zur Erzeugung von Zeiträumen gespeichert ist, und zum Erfassen einer Phasendifferenz zwischen der unmodulierten Trägerwelle, die von jedem der zumindest zwei Empfangsantennen empfangen wird, und
einen ersten Kontrollabschnitt (310), der zur Ausgabe der empfangenen Information zur Identifizierung, zur Erzeugung von Daten, die die erfasste Phasendifferenz der unmodulierten Trägerwelle wiedergeben, und zum Ausgeben der Daten vorgesehen ist; und
wobei die mobile Funkvorrichtung umfasst:
einen zweiten Speicher (214), welcher zum Speichern der Information zur Identifizierung der mobilen Funkvorrichtung vorgesehen ist,
einen zweiten Abschnitt zum Erzeugen von Zeiträumen (260), welcher zur Zeitmessung vorgesehen ist,
einen zweiten Empfangsabschnitt (250), welcher zum Empfangen des Signals zur Informationsanfrage und zum Empfangen des Anforderungssignals der unmodulierten Trägerwelle vorgesehen ist, wobei der zweite Speicher (214) zum Speichern der Zeitrasterdaten des dritten Zeitraums, welche in dem Anforderungssignals der unmodulierten Trägerwelle enthalten ist, vorgesehen ist , und
einen zweiten Übertragungsabschnitt (230) angeordnet zum Übertragen eines Rückmeldesignals, welches die Information zur Identifizierung trägt, in den zweiten Speicher als die Rückmeldung zum Erhalt des Signals der Informationsanfrage, und zum Übermitteln in dem dritten Zeitraum, welcher durch die Zeitrasterdaten bestimmt ist, welche in dem Anforderungssignals der unmodulierten Trägerwelle erhalten und in dem zweiten Speicher gespeichert wurden, der unmodulierten Trägerwelle gemäß der Zeiteinteilung des zweiten Abschnitts zur Erzeugung von Zeiträumen in Rückmeldung zum Erhalt des Anforderungssignal der unmodulierten Trägerwelle.

2. Eine Funkvorrichtung (202), welche zum Einsatz in einem RFID-System geeignet ist, wobei die Vorrichtung umfasst:
einen Speicher (214), welcher zum Speichern von Information zur Identifizierung der Funkvorrichtung vorgesehen ist;
einen Abschnitt zum Erzeugen von Zeiträumen (260), welcher zur Zeitmessung vorgesehen ist;
einen Empfangsabschnitt (250), welcher zum Empfangen eines Signals zur Informationsanfrage, welche die Übermittlung der Information zur Identifizierung der Funkvorrichtung anfordert, vorgesehen ist, und
einen Übertragungsabschnitt (230), welcher zur Übertragung eines Rückmeldesignals, welches die Information zur Identifizierung in dem Speicher als Rückmeldung zum Erhalt eines Signals zur Informationsanfrage trägt, vorgesehen ist; wobei
der Empfangsabschnitt (250) weiter angeordnet ist, nachdem der Übermittlungsabschnitt das Rückmeldesignal übermittelt hat, ein Anforderungssignal der unmodulierten Trägerwelle zu erhalten, welche die Information zur Identifizierung enthält und Übermittlung einer unmodulierten Trägerwelle anfordert, zur Verwendung für eine Positionierung der mobilen Funkvorrichtung und die Zeitrasterdaten eines dritten Zeitraums, welche eine Startzeit und Dauer des dritten Zeitraums beinhaltet, wobei der dritte Zeitraum für die angeforderte Übertragung der unmodulierten Trägerwelle vorgesehen ist und für die Funkvorrichtung (202) spezifisch ist;
der Speicher (214) weiterhin zum Speichern der Zeitrasterdaten des dritten Zeitraums vorgesehen ist, welche das Anforderungssignal der unmodulierten Trägerwelle beinhaltet; und
der Übermittlungsabschnitt weiter zur Übermittlung der unmodulierten Trägerwelle in dem dritten Zeitraum vorgesehen ist, welcher durch die Zeitrasterdaten des dritten Zeitraums bestimmt wird, die in dem Speicher gemäß einer Zeiteinteilung des Abschnitts zum Erzeugen von Zeiträumen als Antwort auf den Erhalt des Anforderungssignals der unmodulierten Trägerwellenanfrage gespeichert sind.

3. Die Funkvorrichtung gemäß Anspruch 2, wobei der Empfangsabschnitt zum Empfangen eines RF-Signals mit einer ersten Frequenz und der Übermittlungsabschnitt zum Übermitteln eines RF-Signals mit einer zweiten Frequenz unterschiedlich zu der ersten Frequenz vorgesehen ist.

4. Eine Funkvorrichtung (302, 304), welche für die Funkkommunikation mit einer mobilen Funkvorrichtung vorgesehen ist, welche für den Einsatz in einem RFID-System geeignet ist, wobei die Funkvorrichtung umfasst:
einen Speicher (314);
zumindest zwei Empfangsantennen (384, 385); einen Abschnitt zum Erzeugen von Zeiträumen (360), welcher zur Zeitmessung vorgesehen ist;
einen Übertragungsabschnitt (330) zur Übertragung in einem ersten Zeitraum eines Signals zur Informationsanfrage, welche die Übertragung einer Information zur Identifizierung der mobilen Funkvorrichtung anfordert, und zum Übermitteln in einem zweiten Zeitraum, nach Erhalt der Antwort zu dem Signal der Informationsabfrage, eines Anforderungssignals einer unmodulierten Trägerwelle, welches die Information zur Identifizierung beinhaltet und die Übertragung einer unmodulierten Trägerwelle zur Verwendung für eine Positionierung der mobilen Funkvorrichtung anfordert und von Zeitrasterdaten eines dritten Zeitraums, welche eine Startzeit und Dauer des dritten Zeitraums umfassen, wobei der dritte Zeitraum vorgesehen ist für die angeforderte Übertragung der unmodulierten Trägerwelle und spezifisch ist für die mobile Funkvorrichtung, von der die Antwort des Signals zur Informationsanfrage empfangen wird,
einen Empfangsabschnitt (350), welcher vorgesehen ist zum Empfangen eines Rückmeldesignals, welches die Information zur Identifizierung trägt, zum Erhalt einer unmodulierten Trägerwelle in dem dritten Zeitraum, welcher durch die Zeitrasterdaten bestimmt ist, die in dem Speicher gemäß der Zeiteinteilung des Abschnitt zum Erzeugen von Zeiträumen gespeichert ist, und zum Erfassen einer Phasendifferenz zwischen der unmodulierten Trägerwelle, welche an jeder der zumindest zwei Empfangsantennen empfangen wird,; und
einen Steuerungsabschnitt (310), welcher zur Ausgabe der empfangenen Information zur Identifizierung und zur Erzeugung von Daten, welche die erfasste Phasendifferenz der unmodulierten Trägerwelle anzeigt, vorgesehen ist.

5. Die Funkvorrichtung nach Anspruch 4, wobei der Übermittlungsabschnitt zur Übermittlung eines RF-Signals mit einer ersten Frequenz und der Empfangsabschnitt zum Empfangen eines RF-Signals mit einer zweiten Frequenz unterschiedlich von der ersten Frequenz vorgesehen ist.

6. Die Funkvorrichtung nach Anspruch 2 oder 3 weiter einen Steuerabschnitt umfassend, welcher zum Steuern des Empfangsabschnitts zur Trägerprüfung und zum Erfassen des Signals der Informationsanfrage oder des Anforderungssignals der unmodulierten Trägerwelle zu bestimmten Intervallen vorgesehen ist, und
der Steuerabschnitt vorgesehen ist, wenn der Empfangsabschnitt einen Träger erfasst, zum Steuern des Empfangsabschnitts derart, dass er weiter das Signal der Informationsanfrage oder das Anforderungssignal der unmodulierten Trägerwelle empfängt.

7. Die Funkvorrichtung nach Anspruch 2 oder 3, wobei der Übertragungsabschnitt einen Modulationsabschnitt, welcher zum Modulieren eines Trägers mit Übertragungsdaten vorgesehen ist, und einen Abschnitt zur Erzeugung einer Trägerwelle, welche zum Erzeugen einer unmodulierten Trägerwelle vorgesehen ist, beinhaltet.

8. Die Funkvorrichtung nach Anspruch 2 oder 3, wobei der Empfangsabschnitt einen Demodulationsabschnitt (354) beinhaltet, welcher zur Demodulation des empfangenen RF-Signals durch beide oder einen der zwei Antennen vorgesehen ist, und einen Abschnitt zur Erkennung einer Phasendifferenz (356), welcher zum Erfassen einer Phasendifferenz der unmodulierten Trägerwelle, welche durch die zwei Antennen empfangen wurde, und zum Bereitstellen der Phasendifferenz zu dem Steuerabschnitt vorgesehen ist.

9. Ein RFID-System umfassend:
die Funkvorrichtung nach Anspruch 4 als eine Referenzfunkvorrichtung, wobei der Kontrollabschnitt von der Funkvorrichtung auch zum Ausgeben der Daten, welche die erfasste Phasendifferenz der unmodulierten Trägerwelle beinhaltet, verwendbar ist; und
die Funkvorrichtung nach Anspruch 2 als mobile Funkvorrichtung.

## Revendications

1. Système RFID, comportant :
un appareil radio mobile (202) ; et
un appareil radio de référence (302, 304) configuré pour une communication radio avec l'appareil radio mobile, l'appareil radio de référence comprenant :
une première mémoire (314),
au moins deux antennes de réception (384, 385),
une première section de génération de synchronisation (360) configurée pour mesurer le temps,
une première section de transmission (330) configurée pour transmettre, pendant une première période, un signal de requête d'information demandant la transmission d'une information d'identification de l'appareil radio mobile, et après réception d'une réponse au signal de requête d'information, pour transmettre, pendant une seconde période, un signal de requête d'onde porteuse non modulée comprenant l'information d'identification et demandant la transmission d'une onde porteuse non modulée à utiliser pour positionner l'appareil radio mobile, et des données de période de temps d'une troisième période comprenant un temps de début et la durée de la troisième période, la troisième période étant prévue pour la transmission demandée de l'onde porteuse non modulée et spécifique à l'appareil radio mobile qui a reçu la réponse au signal de requête d'information,
une première section de réception (350) configurée pour recevoir un signal de réponse portant l'information d'identification, pour recevoir l'onde porteuse non modulée pendant la troisième période déterminée par des données de période de temps mémorisées dans la première mémoire conformément à la synchronisation provenant de la première section de génération de synchronisation, et pour détecter une différence de phase entre l'onde porteuse non modulée reçue à chacune des au moins deux antennes de réception, et
une première section de contrôle (310) configurée pour délivrer l'information d'identification reçue, pour générer des données indiquant la différence de phase détectée de l'onde porteuse non modulée, et pour délivrer les données ; et
l'appareil radio mobile comprenant :
une seconde mémoire (214) configurée pour mémoriser l'information d'identification de l'appareil radio mobile,
une seconde section de génération de synchronisation (260) configurée pour mesurer le temps,
une seconde section de réception (250) configurée pour recevoir le signal de requête d'information et pour recevoir le signal de requête d'onde porteuse non modulée, la seconde mémoire (214) étant configurée pour mémoriser les données de période de temps de la troisième période comprise dans le signal de requête d'onde porteuse non modulée, et
une seconde section de transmission (230) configurée pour transmettre un signal de réponse portant l'information d'identification dans la seconde mémoire en tant que réponse pour recevoir le signal de requête d'information, et pour transmettre, pendant la troisième période déterminée par les données de période de temps reçues dans le signal de requête d'onde porteuse non modulée et mémorisées dans la seconde mémoire, l'onde porteuse non modulée conformément à la synchronisation provenant de la seconde section de génération de synchronisation en réponse à la réception du signal de requête d'onde porteuse non modulée.

2. Appareil radio (202) pouvant être utilisé dans un système RFID, l'appareil comportant :
une mémoire (214) configurée pour mémoriser une information d'identification de l'appareil radio ;
une section de génération de synchronisation (260) configurée pour mesurer le temps ;
une section de réception (250) configurée pour recevoir un signal de requête d'information demandant la transmission de l'information d'identification de l'appareil radio, et
une section de transmission (230) configurée pour transmettre un signal de réponse portant l'information d'identification dans la mémoire en réponse à la réception du signal de requête d'information ; où
la section de réception (250) est en outre configurée, après que la section de transmission a transmis le signal de réponse, pour recevoir un signal de requête d'onde porteuse non modulée comprenant l'information d'identification et demandant la transmission d'une onde porteuse non modulée à utiliser pour positionner l'appareil radio et des données de période de temps d'une troisième période comprenant un temps de départ et la durée de la troisième période, la troisième période étant prévue pour la transmission demandée de l'onde porteuse non modulée et spécifique à l'appareil radio (202) ;
la mémoire (214) est en outre configurée pour mémoriser les données de période de temps de la troisième période comprise dans le signal de requêtes d'onde porteuse non modulée ; et
la section de transmission est en outre configurée pour transmettre l'onde porteuse non modulée pendant la troisième période déterminée par les données de période de temps de la troisième période mémorisée dans la mémoire conformément à la synchronisation provenant de la section de génération de synchronisation en réponse à la réception du signal de requête d'onde porteuse non modulée.

3. Appareil radio selon la revendication 2,
dans lequel la section de réception est configurée pour recevoir un signal RF possédant une première fréquence, et
la section de transmission configurée pour transmettre un signal RF possédant une seconde fréquence différente de la première fréquence.

4. Appareil radio (302, 304) configuré pour une communication radio avec un appareil radio mobile pouvant être utilisé dans un système RFID, l'appareil radio comportant :
une mémoire (314) ;
au moins deux antennes de réception (384, 385) ;
une section de génération de synchronisation (360) configurée pour mesurer le temps ;
une section de transmission (330) configurée pour transmettre, pendant une première période, un signal de requête d'information demandant la transmission d'une information d'identification de l'appareil radio mobile, et après réception d'une réponse au signal de requête d'information, pour transmettre, pendant une seconde période, un signal de requête d'onde porteuse non modulée comprenant l'information d'identification et demandant la transmission d'une onde porteuse non modulée à utiliser pour positionner l'appareil radio mobile et des données de période de temps d'une troisième période comprenant un temps de début et la durée de la troisième période, la troisième période étant prévue pour la transmission demandée de l'onde porteuse non modulée et spécifique à l'appareil radio mobile qui a reçu la réponse au signale de requête d'information ;
une section de réception (350) configurée pour recevoir un signal de réponse portant l'information d'identification, pour recevoir une onde porteuse non modulée pendant la troisième période déterminée par les données de période de temps mémorisées dans la mémoire conformément à la synchronisation provenant de la section de génération de synchronisation et pour détecter une différence de phase entre l'onde porteuse non modulée et reçues à chacune des au moins deux antennes de réception ; et
une section de contrôle (310) configurée pour délivrer l'information d'identification reçue, et pour générer des données indiquant la différence de phase détectée de l'onde porteuse non modulée.

5. Appareil radio selon la revendication 4,
dans lequel la section de transmission est configurée pour transmettre un signal RF possédant une première fréquence, et la section de réception est configurée pour recevoir un signal RF possédant une seconde fréquence différente de la première fréquence.

6. Appareil radio selon la revendication 2 ou 3, comportant en outre une section de contrôle configurée pour contrôler la section de réception de manière à détecter une porteuse et détecter le signal de requête d'information ou le signal de requête d'onde porteuse non modulée à certains intervalles, et
lorsque la section de réception détecte une porteuse, la section de contrôle est configurée pour contrôler la section de réception pour fonctionner pour en outre recevoir le signal de requête d'information ou le signal de requête d'onde porteuse non modulée.

7. Appareil radio selon la revendication 2 ou 3,
dans lequel la section de transmission comprend une section de modulation configurée pour modulée une porteuse avec des données de transmission, et une section de génération d'onde porteuse configurée pour générer une onde porteuse non modulée.

8. Appareil radio selon la revendication 2 ou 3,
dans lequel la section de réception comprend une section de démodulation (354) configurée pour démoduler le signal RF reçu par l'intermédiaire des deux ou d'une des deux antennes, et une section de détection de différence de phase (356) configurée pour détecter une différence de phase des ondes porteuses non modulées reçues par l'intermédiaire des deux antennes et pour délivrer la différence de phase à la section de contrôle.

9. Système RFID comportant :
l'appareil radio selon la revendication 4 en tant qu'appareil radio de référence, dans lequel la section de contrôle dudit appareil radio peut également délivrer les données indiquant la différence de phase détectée de l'onde porteuse non modulée ; et
l'appareil radio selon la revendication 2 en tant qu'appareil radio mobile.
